# EUROPEAN PATENT APPLICATION

(11) **EP 4 371 438 A1**
(43) Date of publication of application: **22.05.2024**
(21) Application number: 23210711.0
(22) Date of filing: 17.11.2023
(51) Int. Cl.: A41H 3/04, G06F 30/27, G06T 19/20

(54) **AUTOMATIC ARRANGEMENT OF PATTERNS FOR GARMENT SIMULATION USING NEURAL NETWORK MODEL**

(30) Priority: 18.11.2022 KR 20220155198; 14.12.2022 KR 20220175320; 12.10.2023 KR 20230135931
(71) Applicant: CLO Virtual Fashion Inc., Seoul 06236 (KR)
(72) Inventor: JU, Eun Jung, Gangnam-gu (KR); KANG, Dong Sig, Gangnam-gu (KR); LEE, Ho Hyun, Dong Sig KANG (KR)
(74) Representative: Boult Wade Tennant LLP

(57) **Abstract**

An automatic arrangement method and device may receive pattern information for each pattern including shapes and sizes of patterns constituting a garment. Arrangement points at which the patterns are to be initially arranged on a three-dimensional (3D) avatar are predicted by applying the pattern information for each pattern to a neural network model trained to classify and arrange the patterns based on confidence scores calculated based on the pattern information. The patterns are arranged on the 3D avatar based on the arrangement points.

## Description

### CROSS-REFERENCE TO RELATED APPLICATIONS

This application claims the benefit under 35 U.S.C. §119(a) of Republic of Korea Patent Application No. 10-2022-0155198 filed on November 18, 2022, Republic of Korea Patent Application No. 10-2022-0175320 filed on December 14, 2022, and Republic of Korea Patent Application No. 10-2023-0135931 filed on October 12, 2023, the entire disclosures of which are incorporated herein by reference for all purposes.

### BACKGROUND

### 1. Field

Embodiments described herein relate to automatically placing patterns of a garment on a three-dimensional (3D) avatar for simulation.

### 2. Description of Related Art

A garment appears three-dimensional (3D) when worn by a person, but the garment is more of a two-dimensional (2D) object because it is a combination of pieces of fabric that are cut according to a 2D pattern. Because fabric, that is, a material of a garment, is flexible, the shape of the fabric may vary depending on the body shape or movement of a person wearing the garment. In addition, different fabrics may have different physical properties (e.g., strength, elasticity, and shrinkage). Because of such differences, garments made of the same shaped patterns express different behavior, look and feel when donned on a 3D avatar.

In the garment industry, computer-based clothing simulation technology is widely used to develop actual clothing designs. During clothing simulation, a user typically manually arranges clothing patterns of a garment at suitable positions on a three-dimensional (3D) avatar. Such arrangement of patterns may involve a great amount of time and impose difficulty on a user with a lack of expertise in clothing designing or simulation.

### SUMMARY

Embodiments relate to arrangement patterns of a garment for performing simulation on a computing device by using a neural network model. Pattern information indicating configurations of each of the patterns is received. The pattern information is applied to a neural network model to extract features from the configurations of each of the patterns. Arrangement points for placing the patterns relative to a three-dimensional (3D) avatar on which the garment is placed by processing the extracted features are predicted. At least a subset of the patterns is arranged at the predicted arrangement points. The patterns from the arrangement points are assembled into the garment placed on the 3D avatar. Simulation of the garment is performed on the 3D avatar.

In one or more embodiments, prediction scores are generated for each of the patterns. Each of the prediction scores indicates likelihood that placing of each of the patterns onto each of the arrangement points is correct. The highest prediction score for each of the patterns is set as a confidence score of each of the patterns. Arrangement of the patterns is prioritized according to confidence scores of the patterns where a pattern with a higher confidence score have a higher priority in arranging of the patterns at an arrangement point associated with the confidence score.

In one or more embodiments, the configurations of each of the patterns includes sizes and shapes of each of the patterns.

In one or more embodiments, the neural network model is trained by backpropagating a loss representing a difference between predicted arrangement points for each of training patterns and correct arrangement points for each of the training patterns.

In one or more embodiments, the neural network model determines a major classification class of an arrangement plate to which a target pattern belongs, determines each confidence score of the target pattern belonging to each of the major classification class, and determines a confidence score corresponding to the major classification class by adding the confidence scores.

In one or more embodiments, the pattern information further comprises at least one of: symmetry information of the patterns indicating which of the patterns are symmetrical, a total number of the patterns in the garment, and internal line segment information of the patterns comprising at least one of a notch of the patterns, a sewing line of the patterns, a cut line of the patterns, a dart line of the patterns, a length of each line segment of the patterns, or a curvature of each line segment of the patterns.

In one or more embodiments, supplemental information comprising at least one of a size of the 3D avatar, positions of the arrangement points on the 3D avatar, or a size of an arrangement plate comprising the arrangement points is received. The supplemental information is fed to the neural network model for predicting the arrangement points.

In one or more embodiments, sewing information indicating pairs of line segments of the patterns to be sewn and directions in which the line segments are to be sewn is predicted.

In one or more embodiments, the neural network model is trained by backpropagating a difference between predicted sewing information and correct sewing information.

In one or more embodiments, the neural network model is trained by backpropagating a loss derived from a length between line segments of the patterns to be sewn to each other.

In one or more embodiments, determination as to whether a target pattern is a superimposing pattern is made based on whether the pattern satisfies a predetermined condition. When the target pattern is the superimposing pattern, excluding information of the superimposing pattern from the pattern information applied to the neural network model.

In one or more embodiments, wherein the predetermined condition comprises at least one of: a size of the target pattern being less than or equal to a preset threshold size, presence of a line segment of another pattern that is sewn to an internal line segment of the target pattern, or the target pattern being connected to another superimposing pattern by sewing.

In one or more embodiments, when it is determined that the target pattern is the superimposing pattern, the target pattern is arranged by superimposing the target pattern on a base pattern to be sewn with the target pattern.

In one or more embodiments, determination is made as to whether a target pattern is symmetrical relative to another of the patterns. The total size of the target pattern and the other pattern are determined when the target pattern is symmetrical. When the total size is less than or equal to a threshold size, the target pattern is determined as a superimposing pattern.

In one or more embodiments, the at least a subset of patterns are arranged by determining whether each of the confidence scores exceed a preset confidence threshold value. The subset of patterns at the predicted arrangement points are arranged when the confidence scores of the subset of patterns exceeds the preset confidence threshold value.

In one or more embodiments, an adjustment to the preset confidence value is received through a user interface (UI).

In one or more embodiments, determination is made as to whether a target pattern corresponds to a first symmetrical pattern that is symmetrical to a second symmetrical pattern. When the target pattern is the first symmetrical pattern, the first symmetrical pattern and the second symmetrical pattern are arranged at arrangement points that are symmetrically placed on the 3D avatar.

In one or more embodiments, when the first symmetrical pattern has a higher confidence score relative to the second symmetrical pattern, the first symmetrical pattern is arranged at a predicted arrangement point and the second symmetrical pattern is arranged at a position symmetric to the predicted arrangement point on the 3D avatar.

In one or more embodiments, when the target pattern determined as the first symmetric pattern and having line segments to be sewn to another pattern, the target pattern and the other pattern are arranged at a predicted arrangement point of the target pattern or a predicted arrangement point the other pattern, depending on which has a higher confidence score.

In one or more embodiments, determination is made as to whether a first predicted arrangement point for the first symmetrical pattern and a second predicted arrangement point for the second symmetrical pattern are identical. When the first predicted arrangement point is identical to the second predicted arrangement point, one of the first symmetric pattern and the second symmetrical pattern with a higher confidence score is arranged at the first predicted arrangement point.

In one or more embodiments, when a target pattern corresponds to a portion of one of arrangement plates of the garment, and no pattern remains in the one of the arrangement plates other than the target pattern corresponding to the portion, the target pattern corresponding to the portion is arranged at a center of the one of the arrangement plates.

In one or more embodiments, a superimposing pattern of the patterns is arranged on a base pattern to which the superimposing pattern is imposed.

In one or more embodiments, the patterns includes information on corresponding arrangement points and arrangement plates comprising the arrangement points.
In one or more embodiments, the pattern information comprises an image of each of the patterns.

Embodiments also relate to a non-transitory computer-readable storage medium that stores a neural network model. The neural network model is trained by receiving pattern information indicating configurations of each of training patterns where at least a subset of the training patterns forming a garment. Correct arrangement points are received for each of the training patterns on a three-dimensional (3D) avatar on which the garment is placed. Features are extracted from the pattern configurations of each of the training patterns. The neural network model predicts arrangement points for placing the patterns relative to the 3D avatar. Loss representing differences between the predicted arrangement points and the correct arrangement points is determined. The loss is backpropagated to update weights of the neural network model.

In one or more embodiments, the features are extracted by extracting a first feature of a first pattern, extracting a second feature of a second pattern, and generating a third feature and a fourth feature by processing the first pattern and the second pattern by a transformer encoder of the network model.

In one or more embodiments, during the training of the neural network model, sewing information is predicted. The sewing information indicates pairs of line segments of the training patterns to be sewn and directions in which the line segments are to be sewn. Correct sewing information of the training patterns is received. A difference between predicted sewing information and correct sewing information is backpropagated to update the neural network model.

### BRIEF DESCRIPTION OF THE DRAWINGS

These and/or other aspects, features, and advantages of the present disclosure will become apparent and more readily appreciated from the following description of embodiments, taken in conjunction with the accompanying drawings of which:
FIG. 1 illustrates a flowchart of automatically arranging patterns of a garment on a 3D avatar, according to an embodiment;
FIG. 2 is a block diagram illustrating a mechanism for determining arrangement points using a neural network model, according to an embodiment;
FIG. 3 is a diagram illustrating arrangement points and associated arrangement plates, according to an embodiment;
FIG. 4 is a diagram illustrating arrangement points of patterns classified and grouped, according to an embodiment;
FIG. 5 is a conceptual diagram illustrates the process of automatically arranging clothing patterns, according to an embodiment;
FIG. 6 are diagrams illustrating a garment where a pattern is superimposed on a base pattern, according to an embodiment;
FIG. 7 is a graphical user interface diagram where symmetrical patterns of a garment are illustrated in a section of the user interface diagram, according to an embodiment;
FIG. 8 is a block diagram of a neural network model for determining an arrangement point of a single pattern using pattern information, according to an embodiment;
FIG. 9 is a conceptual diagram illustrating training of a neural network model of FIG. 8 using pattern information, according to an embodiment;
FIGS. 10A and 10B are block diagrams of a neural network model for determining arrangement points of multiple patterns simultaneously, according to an embodiment;
FIG. 11 is a conceptual diagram illustrating using a neural network model on pattern information, internal line segment information, and additional information of a plurality of patterns, according to an embodiment;
FIGS. 12A, 12B, and 12C are conceptual diagrams illustrating training of the neural network model of FIG. 11, according to an embodiment;
FIGS. 13A, 13B, 13C, 13D, and 13E are a sequence of user interface diagrams illustrate a process of automatically arranging patterns on a 3D avatar, according to an embodiment; and
FIG. 14 is a block diagram of an automatic arrangement device, according to an embodiment.

### DETAILED DESCRIPTION

Hereinafter, embodiments of the present disclosure are described in detail with reference to the accompanying drawings. When describing the example embodiments with reference to the accompanying drawings, like reference numerals refer to like components

The terminology used herein is for describing various examples only and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Also, in the description of embodiments, detailed description of structures or functions that are thereby known after an understanding of the disclosure of the present application are omitted to avoid obfuscation of the embodiments.

Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Throughout the specification, when an element is described as "connected to" or "coupled to" another element, it may be directly "connected to" or "coupled to" the other component, or there may be one or more other components intervening therebetween. In contrast, when an element is described as "directly connected to" or "directly coupled to" another element, there can be no other elements intervening therebetween.

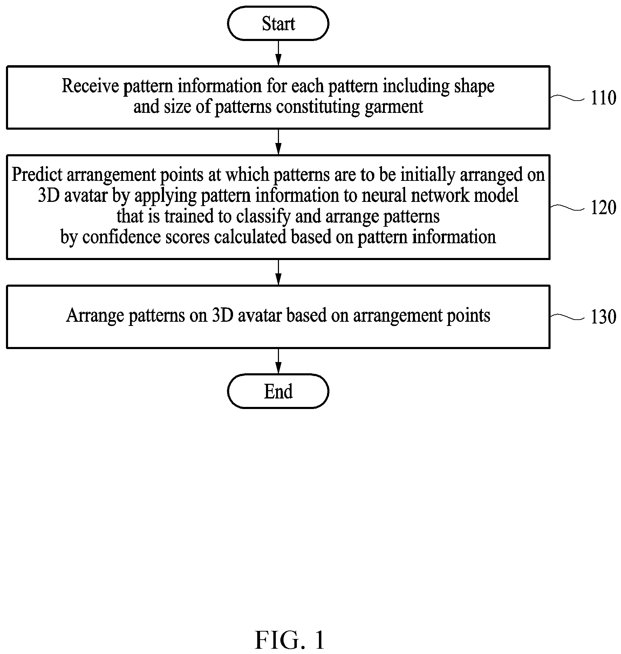

FIG. 1 illustrates a flowchart of automatically arranging patterns of a garment on a three-dimensional (3D) avatar, according to an embodiment. The sequence of operations illustrated in FIG. 1 may be modified. For example, the operations may be performed in different orders, and at least two of the operations may be performed in parallel. Referring to FIG. 1, an automatic arrangement device may arrange patterns on a three-dimensional (3D) avatar.

The term "avatar" used herein may include all types of 3D objects around or on which a garment may be draped. The avatar may be provided in a human shape but may also include objects of any shape, such as, for example, a dummy, a hanger, or an animal. In addition, the avatar may be set to be visible or invisible when being draped by a garment.

First, the automatic arrangement device may receive 110 pattern information of patterns constituting a garment. The pattern information may indicate, among others, the configuration of the patterns such as the shapes and sizes of the patterns.

A pattern described herein refers to a design or configuration of a two-dimensional (2D) fabric generated and processed by a computer program. The pattern may be part of a garment for placement on a 3D avatar. The term "pattern" and the term "clothing pattern" are used interchangeably herein.

A pattern may be modeled as a combination of meshes. A mesh may be triangular where each of the three vertices of the mesh is assigned with mass (e.g., point mass), and sides of the mesh are represented by elastic springs that connect the masses. Such pattern may be modeled by, for example, a mass-spring model where each of the springs have respective resistance values with respect to, for example, stretching, shearing, and bending, according to the physical properties of the fabric used. Each vertex may move according to an external force such as gravity and an internal force due to stretching, shearing, and bending. By calculating the external force and the internal force to obtain a force applied to each vertex, a displacement and speed of a movement of each vertex may be determined. In addition, using the collective movement of vertices of the meshes at each time step, the temporal and spatial movement of a virtual garment including the meshes may be simulated. Draping 2D virtual clothing patterns formed with triangular meshes on a 3D avatar may implement a natural-looking 3D virtual garment based on the laws of physics. In other embodiments, the meshes may have shapes other than triangles (e.g., quadrilateral shapes).

The pattern information for each pattern may further indicate one or more of (i) information on internal line segments of each pattern, (ii) information on symmetry of the patterns, and (iii) the number of the patterns. The information on internal line segments may represent information on line segments in the pattern, excluding outlines of the pattern. The internal line segment information of the patterns may include, but is not limited to, one or more notches in the pattern, sewing lines of the pattern, cut lines of the pattern, dart lines of the pattern, a length of each line segment of the patterns, and a curvature of each line segment of the pattern. The term "internal line segment" of a pattern used herein may be a term that comprehensively refers to a line inside but excluding an outline of the pattern.

Avatar information described herein indicates information on which a garment is placed. The avatar information may include, but is not limited to, the size of the 3D avatar, positions of arrangement points on the 3D avatar, and the size of an arrangement plate including the arrangement points.

Then, the automatic arrangement device may predict 120 arrangement points at which the patterns are to be initially arranged on the 3D avatar by applying the pattern information for each pattern (and the avatar information) to a neural network model that is trained to classify and arrange the patterns based on confidence scores determined by processing the pattern information for each pattern (and the avatar information). The neural network model may extract features from the pattern information for each pattern and generate a confidence score for each pattern indicating the likelihood that the pattern corresponds to a certain pattern that are typically found in a garment. For each pattern, the neural network model may predict the names, 3D positions of corresponding the arrangement points or both the 3D points and the arrangement points based on the confidence score for each pattern. The prediction on the corresponding arrangement point may be in the form of 3D position coordinates of the arrangement point, an offset, and/or a name of the arrangement point. The offset used herein may be a value indicating x-axis, y-axis, and z-axis movements with respect to a specific point on the 3D position coordinates.

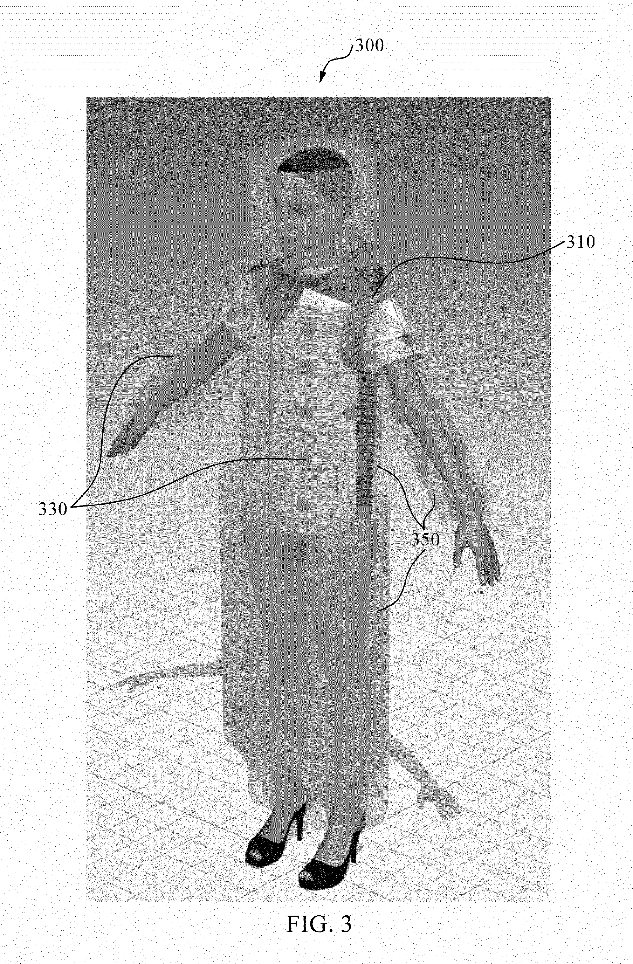

An arrangement point described herein refers to an initial position of an associated piece relative to a body part of a 3D avatar before the associated piece is connected to one or more adjacent piece via a seamline. For simulation or visual representation, a garment may be assembled by moving its pieces from their arrangement points to assembled points while interacting with the 3D avatar. In one embodiment of a 3D avatar, there are 109 arrangement points. An example of the arrangement points and arrangement plates including the arrangement points are described in detail below with reference to FIG. 3.

In some embodiments, before predicting 120 the arrangement points, the automatic arrangement device may perform a pre-processing process to exclude a superimposing pattern from a target of an automatic arrangement. Specifically, the automatic arrangement device may determine a target pattern as a superimposing pattern based on whether the target pattern satisfies a superimposition condition. The superimposition condition may include, among other conditions, (i) the size of the target pattern being less than or equal to a preset threshold size, (ii) a line segment of another pattern being sewn to an internal line segment of the target pattern, and (iii) the target pattern being connected to another superimposing pattern by sewing. The conditions (i) and (ii) may be referred to herein as "superimposition sewing conditions."

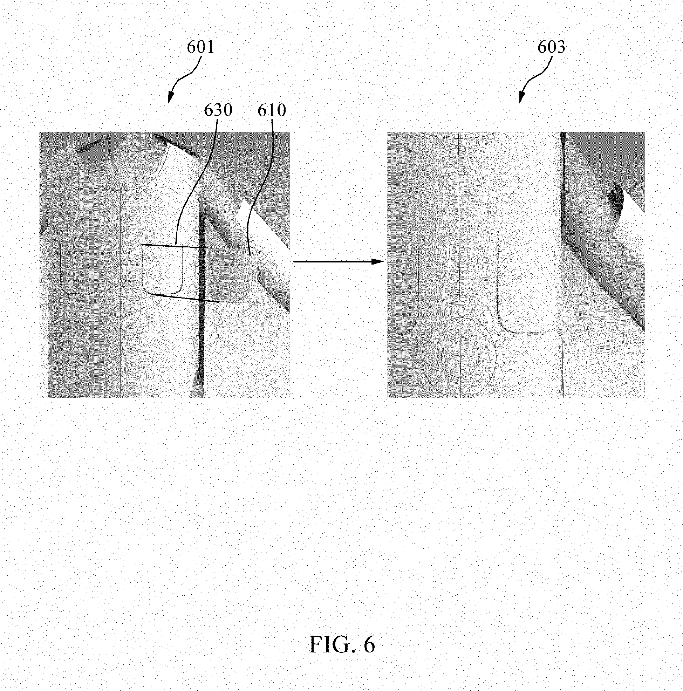

The automatic arrangement device may predict arrangement points of remaining patterns other than the superimposing pattern by applying pattern information of the remaining patterns to the neural network model. In contrast, when the target pattern is determined as the superimposing pattern, the automatic arrangement device may arrange the superimposing pattern by superimposing it on a base pattern onto which the superimposing pattern is sewn. That is, the automatic arrangement device does not arrange the superimposing pattern using arrangement points, but rather by either (i) superimposing a point (e.g., the geometric center point) of the superimposing pattern onto a point (e.g., the geometric center point) of the base pattern or (ii) superimposing a sewing line of the superimposing pattern onto a sewing line of the base pattern. The superimposing pattern will be described in detail below with reference to FIG. 6.

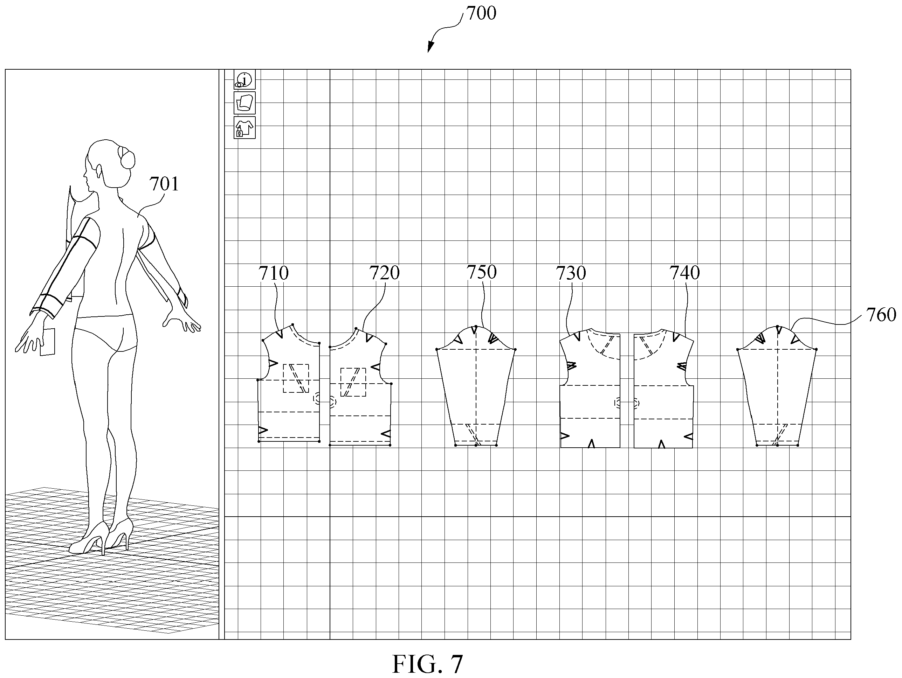

Along with the determining of the target pattern as the superimposing pattern, the automatic arrangement device may also determine whether the target pattern corresponds to any one of symmetrical patterns in the garment. When the target pattern is one of two symmetrical patterns, the automatic arrangement device may determine one of the symmetrical pattern as a superimposing pattern based on whether the total size of both symmetrical patterns is less than or equal to a threshold size. For example, when a result of adding the sizes of the two symmetrical patterns is less than or equal to the threshold size, the automatic arrangement device may determine one of the symmetrical patterns as a superimposing pattern. In some embodiments, the automatic arrangement device may omit checking the superimposition sewing condition for the symmetrical patterns. The symmetrical patterns are described in detail below with reference to FIG. 7.

Alternatively, the automatic arrangement device may store information on the superimposing pattern in, for example, a superimposing tree. The automatic arrangement device may register the superimposing pattern in the superimposing tree as a child pattern of its base pattern to which the child pattern is sewn.

The automatic arrangement device may arrange 130 the patterns on the 3D avatar based on the arrangement points the predicted arrangement points, The automatic arrangement device may arrange the patterns at the arrangement points, based on at least one of whether the patterns are symmetrical patterns, whether there are line segments (or sewing lines) sewing the patterns, confidence scores corresponding to the patterns, and the sizes of the patterns. A process performed by the automatic arrangement device to arrange the patterns at the arrangement points predicted by the neural network model may be referred to herein as a post-processing process since it is performed after the prediction is performed by the neural network model.

For example, when the patterns are symmetrical, the automatic arrangement device may preferentially arrange, at an arrangement point, a symmetrical pattern (e.g., a first symmetrical pattern) having a higher confidence score and/or a larger area. After the first symmetrical pattern is arranged, the automatic arrangement device arranges a counterpart symmetrical pattern (e.g., a second symmetrical pattern) symmetrical to the first symmetrical pattern at a position that is symmetrical to a position of the arrangement point of the first symmetrical pattern.

When the target pattern corresponds to one of two symmetrical patterns, the automatic arrangement device may arrange the two symmetrical patterns at arrangement points that are positioned symmetrical to each other relative to the 3D avatar. The automatic arrangement device determines whether the target pattern corresponds one of the two symmetrical patterns Upon determining that the target pattern is one of the two symmetrical patterns, the automatic arrangement device may arrange the first symmetrical pattern and a counterpart second symmetrical pattern at arrangement points at positions symmetrical relative to the 3D avatar. When positions predicted by the neural network model do not correspond to left and right arrangement points that are symmetrical relative to the 3D avatar, the automatic arrangement device may decline to arrange the symmetrical patterns.

When the first symmetrical pattern is arranged at the arrangement points but the second symmetrical pattern is not arranged at the arrangement points, the automatic arrangement device may arrange the second symmetrical pattern at the arrangement points at a position that is symmetrical to the arrangement point of the first symmetrical pattern. For example, when only the right symmetrical pattern is arranged at an arrangement point and the left symmetrical pattern is not arranged at an arrangement point, the automatic arrangement device may arrange the left symmetrical pattern at an arrangement point at a position that is symmetrical to the arrangement point of the right symmetrical pattern.

When a pattern is one of symmetrical patterns and it includes line segments (or sewing lines) to be sewn together with other patterns, the automatic arrangement device may arrange the symmetrical patterns and the other patterns at arrangement points based on a symmetrical pattern having a higher confidence score.

The automatic arrangement device may determine whether predicted arrangement points corresponding to a first symmetrical pattern and a second symmetrical pattern are the same. When it is determined that the predicted arrangement points are the same, the automatic arrangement device may arrange a symmetrical pattern having a higher confidence score at the predicted arrangement points. For example, when arrangement positions of two symmetrical patterns are predicted to be placed at the same arrangement point, the automatic arrangement device may arrange only the symmetrical pattern having a higher confidence score at the corresponding arrangement point, and/or change the position of the other symmetrical pattern having a lower confidence score.

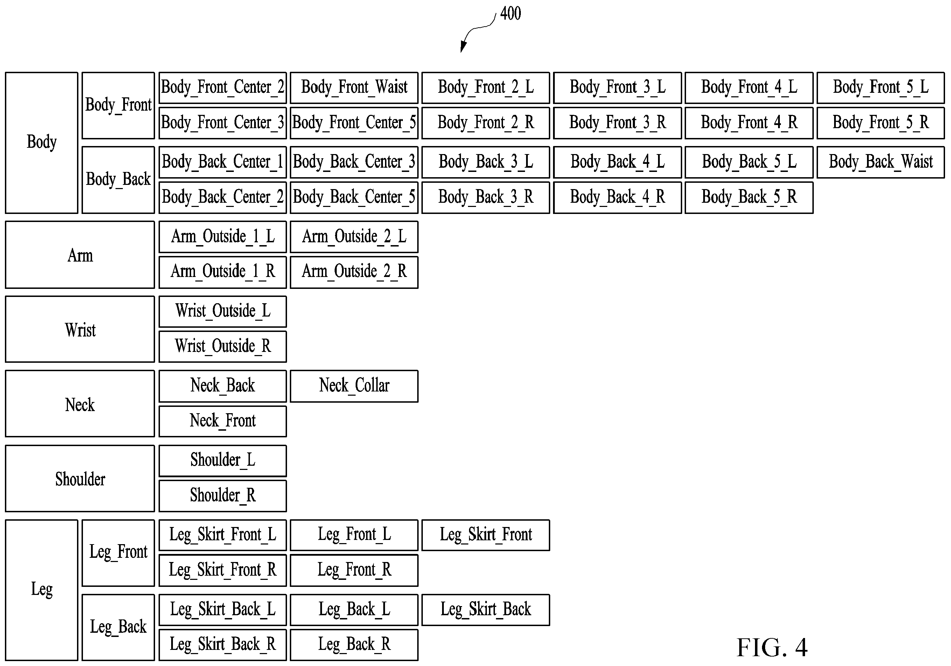

As described in detail below with reference to FIGS. 3 and 4, a target pattern may correspond to a portion of one arrangement plate, for example, a front body (Body_Front) or a back body (Body_Back). When the target pattern corresponds to a portion of a random arrangement plate of a garment, and there is no remaining pattern in the arrangement plate other than the target pattern corresponding to the portion of the arrangement plate, the automatic arrangement device may arrange the pattern corresponding to the portion of the arrangement plate at the center position of the arrangement plate. In this case, the automatic arrangement device may change the name of the target pattern arranged at the center position to, for example, a "front body center." When a target pattern corresponds to the base pattern onto which a superimposing pattern satisfying the superimposition condition is arranged, and the base pattern is arranged at a predicted arrangement point, the automatic arrangement device may arrange the superimposing pattern on the base pattern.

In some embodiments, the automatic arrangement device may determine whether the confidence scores exceed a preset confidence threshold value. When the confidence scores exceed the confidence threshold value, the automatic arrangement device may arrange the patterns at the arrangement points. For example, the confidence threshold values may be set as 1.0, 0.8, 0.4, or 0.0 for each level. The confidence threshold value may be adjustable through a user interface (UI). The automatic arrangement device may allow a user to adjust the confidence threshold value through the UI, such that an automatic arrangement of the patterns is to be performed according to an automatic arrangement level that satisfies the user.

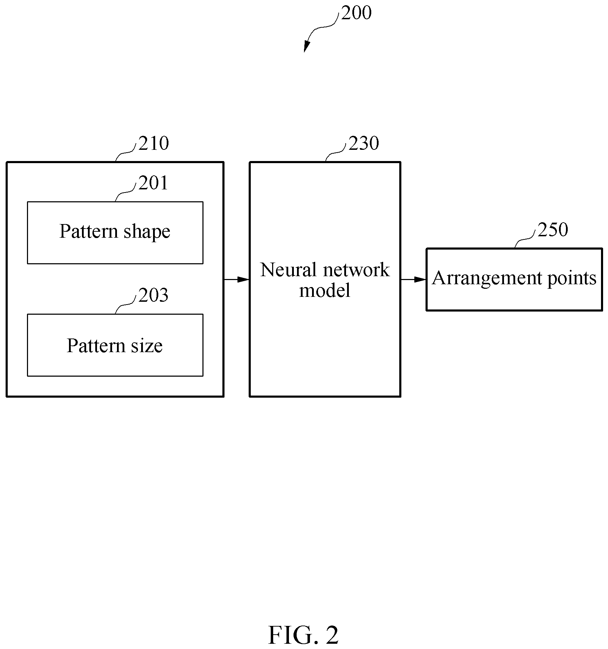

FIG. 2 is a block diagram illustrating a mechanism for determining arrangement points using neural network model 230, according to an embodiment. Diagram 200 shows neural network model 230 that receives pattern information 210, processes the pattern information 210 and outputs predicted arrangement points 250. The pattern information 210 for each pattern may include, for example, the configuration of each such as a shape 201 of each of patterns and a size 203 of each of the patterns. The shape 201 may be provided to the neural network model 230 in the form of a pattern image of a predetermined size. The pattern image may obtained by rendering an edge, a notch, an internal line segment, and the like of a pattern, or may be an image obtained through normalization after the rendering of the edge, notch, internal line segment, and the like of the pattern. The pattern image may be, for example, a thumbnail image including a shape of one pattern. The size 203 of each of the patterns, may be a numerical value in the unit of square meters. For example, the automatic arrangement device may normalize the size 203 of the patterns using, for example, an average and/or standard deviation of sizes of all patterns of a garment stored in a pattern database (DB). The neural network model 230 may be trained to classify the patterns and calculate confidence scores of such classification based on the pattern information 210. For this purpose, the neural network model 230 may extract features from the pattern information 210 for each pattern. The neural network model 230 may calculate a confidence score for each of the patterns using the extracted features and the sizes of the patterns. The neural network model 230 may also predict the arrangement points 250 based on the confidence score for each of the patterns. The neural network model 230 may predict the arrangement points 250 in the form of 3D position coordinates, offsets, and/or names of the arrangement points 250. The arrangement points 250 and arrangement plated including the arrangement points 250 are described in detail below with reference to FIG. 3.

FIG. 3 is a diagram illustrating arrangement points 330 and associated arrangement plates 350, according to an embodiment. There may be, for example, 109 arrangement points associated with a 3D avatar 310. The arrangement points 330 are points at which 2D patterns are to be arranged on or above body parts of the 3D avatar 310. The 2D patterns are arranged at the arrangement points and then assembled onto or donned on the 3D avatar 310 for clothing simulation.

The names of the arrangement points 330 may correspond to classification names of the arrangement plates 350 to which the arrangement points 330 are assigned. For example, the names of the arrangement points 330 may be major classification names obtained through a broad classification of the arrangement plates 350 including the arrangement points 330, or may be minor classification names obtained through a detailed classification of the arrangement plates 350 having the major classification names.

An arrangement plate includes one or more arrangement points corresponding to each body part reflected with the body shape and the posture of the 3D avatar 310. Arrangement plates 350 may correspond to body parts of the 3D avatar 310. Each of body part arrangement plates may be assigned to both hands, both feet, both elbows, both knees, both arms, both wrists, left and right bodies, and the like. For example, a body part arrangement plate may be formed in the shape of a 3D column that surrounds a corresponding body part. The 3D column may be shaped as, for example, a cylinder, an elliptical cylinder, and a polygonal prism. The body part arrangement plate may be formed shapes other than a 3D column.

The arrangement plates 350 may be classified through a broad classification into a body arrangement plate, an arm arrangement plate, a wrist arrangement plate, a shoulder arrangement plate, a leg arrangement plate, an ankle arrangement plate, a lower body arrangement plate, a neck arrangement plate, and a head arrangement plate. The body arrangement plate may include two sub-arrangement plates: a left body arrangement plate and a right body arrangement plate, or a front body arrangement plate and a back body arrangement plate. The arm arrangement plate may include\ sub-arrangement plates for a left arm, a right arm, and both arms. The wrist arrangement plate may include sub-arrangement plates for a left wrist, a right wrist, and both wrists. The shoulder arrangement plate may include sub-arrangement plates for a left shoulder, a right shoulder, and both shoulders. The leg arrangement plate may include sub-arrangement plates for a left leg, a right leg, and both legs, or front legs and back legs. The ankle arrangement plate may include sub-arrangement plates for a left ankle, a right ankle, and both ankles. The lower body arrangement plate may include sub-arrangement plates for a left lower body and a right lower body, or a front lower body and a back lower body. The neck arrangement plate may include sub-arrangement plates for a left neck portion, a right neck portion, and both neck portions. The head arrangement plate may include sub-arrangement plates divided in three directions of the head, for example, left, right, and vertical directions, or X (horizontal), Y (vertical), and Z (depth) directions. The automatic arrangement device may predict an arrangement point on an arrangement plate of a body part of the 3D avatar 310 to arrange a 2D pattern using a neural network model, and store such predicted information in the 2D pattern.

The automatic arrangement device may determine as initial positions of the 2D patterns, the arrangement points 330 of the arrangement plates 350 at which the 2D pattern) are to be arranged based on the information stored in the 2D patterns. An "initial position" refers to position for initially arranging a 2D pattern close to a 3D avatar for a subsequent assembling or donning on the 3D avatar. 2D patterns may be moved from their initial positions onto subsequent positions where the 2D patterns are assembled and donned onto the 3D avatar 310. In one or more embodiments, the movements of the patterns from their initial positions (e.g., as shown in diagram 300) to their subsequent positions are displayed on a user interface screen. According to an embodiment, after selecting 2D patterns of a garment that a user desires to drape on a 3D avatar, when the user does not directly select arrangement points near positions at which the user desires to drape the 2D patterns, the automatic arrangement device may allow the 2D patterns to be automatically worn at suitable positions on the 3D avatar.

FIG. 4 is a diagram illustrating arrangement points of patterns classified and grouped, according to an embodiment. Diagram 400 shows a broad classification of arrangement plates and a more detailed classification of the arrangement plates, according to an embodiment. According to an embodiment, arrangement plates may be broadly classified into major categories, such as, for example, body, arm, wrist, neck, shoulder, and leg. In addition, the arrangement plates of a major category may be further classified into multiple detailed categories, such as, middle categories and sub-categories. For example, a body arrangement plate of a body is classified into middle categories such as a front body arrangement plate (Body_Font) and a back body arrangement plate (Body_Back). Alternatively, the body arrangement plate classified as body may be classified in detail into sub-categories such as front body center 2 (Body_Font_Center_2), front body center 3 (Body_Font_Center_3), front body right 2 (Body_Font_2_R), front body left 2 (Body_Font_2_L), back body center 2 (Body_Back_Center_2), back body center 3 (Body_Back_Center_3), back body right 2 (Body_Back_2_R), and back body left 2 (Body_Back_2_L). The names of arrangement points may correspond to names (e.g., major classification names) of the major categories obtained through the broad classification, names (e.g., middle classification names) of the middle categories obtained through the intermediate classification, or names (e.g., minor classification names) of the sub-categories obtained through the detailed classification.

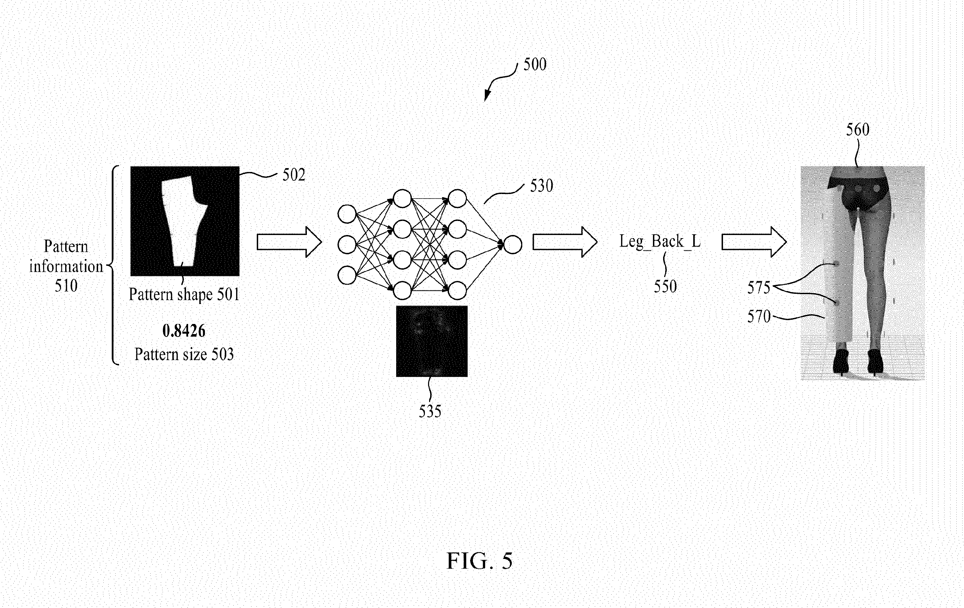

FIG. 5 is a conceptual diagram illustrates the process of automatically arranging clothing patterns, according to an embodiment. Diagram 500 shows providing pattern information 510 of a pattern (e.g., a right front leg pattern) to a neural network model 530. In response, the neural network model 530 predicts information about an arrangement point (e.g., a name 550 of the arrangement point) corresponding to the pattern information 510. Then, the automatic arrangement device arranges the pattern at arrangement points 575 of an arrangement plate 570 of a 3D avatar 560 based on the predicted information. The pattern information 510 may include, for example, a pattern image 502 including a pattern shape 501 of the right front leg pattern, and a pattern size 503 of the right front leg pattern.

The size of the pattern image 502 may be, for example, a size of 512 × 512 pixels or a size of 224 × 224 pixels. In FIG. 5, the pattern image 502 shows the pattern shape 501 while the remaining portion of the pattern image 502 is shown in black. The automatic arrangement device may automatically fill the remainder of a pattern image in black. The automatic arrangement device may normalize a size of the pattern image 502 using, for example, an average and/or standard deviation of pattern images stored in a pattern DB. Alternatively, the automatic arrangement device may resize the pattern image 502 to 224 × 224 pixels so that transfer learning may be performed from a neural network model trained by a large dataset such as ImageNet. The transfer learning is a machine learning technique that reuses part of the neural network model trained with a specific task to perform another task. The pattern size 503 may be an actual pattern size (e.g., 0.8426 m²) or may correspond to a normalized pattern size obtained by normalizing the actual pattern size by a predetermined ratio.

The neural network model 530 may extract features from the pattern information 510. The features may correspond to the pattern image 502 or may correspond to the pattern image 502 and the pattern size 503. The features may be in the form of a feature vector or a feature map 535.

The neural network model 530 may calculate prediction scores corresponding to the right front leg pattern using the features (e.g., the feature map 535) and the pattern size 503. For example, the neural network model 530 may apply the features (e.g., the feature map 535) and the pattern size 503 (e.g., 0.8426 m²) to fully connected layers to calculate predictions scores of arrangement points. The arrangement points may correspond to major categories (e.g., body, arm, wrist, neck, shoulder, leg, head, and ankle) or may correspond to middle categories or sub-categories. The prediction scores are values processed through, for example, a softmax layer, and indicate the likelihood that the classification of the pattern as one of 109 arrangement points is correct. An arrangement point with the highest prediction score is predicted to be the arrangement point at which the pattern is to be arranged. The highest prediction score may be a confidence score of the right front leg pattern.

In some embodiments, the neural network model 530 may determine a major classification class of the arrangement plates to which the pattern corresponding to the predicted arrangement point belongs. The neural network model 530 may calculate confidence scores of patterns belonging to the major classification class, and calculate a confidence score of the patterns corresponding to the major classification class by adding up the confidence scores.

The neural network model 530 may predict the arrangement points 575 of the arrangement plate 570 for placing the right front leg pattern. The prediction information generated by neural network 530 may indicate arrangement points 575 to which the a pattern to be assigned or an arrangement plate 570 to which the pattern is to be assigned. The automatic arrangement device may arrange one pattern on the 3D avatar 560 based on the predicted arrangement points 575 or arrangement plate 570

FIG. 6 are diagrams illustrating a garment where a pattern is superimposed on a base pattern, according to an embodiment. Diagrams 601, 603 show a pocket pattern 610 as a superimposing pattern superimposed on a left front body pattern 630 as a base pattern before and after, respectively. The automatic arrangement device may determine whether a target pattern (e.g., pattern 610) satisfies a superimposition condition. If so, the target pattern is determined as a superimposing pattern. The automatic arrangement device may arrange the pattern determined as the superimposing pattern over a base pattern with a slight gap between the two patterns. Such an arrangement may be referred to herein as "superimposing." The automatic arrangement device may exclude the superimposing pattern from patterns to be automatically arranged using arrangement points, and thereby reduces the amount of computation of a neural network model.

For example, when a line segment of another pattern (e.g., the left front body pattern 630) is sewn to an internal line segment of the pocket pattern 610, as shown in drawing 601, the automatic arrangement device may determine the pocket pattern 610 as a superimposing pattern. The automatic arrangement device may arrange the pocket pattern 610 (determined as a superimposing pattern) by superimposing it on the base pattern to be sewn with the pocket pattern 610. In this case, the base pattern may be a counterpart pattern that is to be connected to the pocket pattern 610 by sewing, which is the left front body pattern 630, for example. The automatic arrangement device may arrange the pocket pattern 610 without using arrangement points. That is, the automatic arrangement device may arrange the pocket pattern 610 by superimposing the pocket pattern 610 at a position of a second sewing line of the left front body pattern 630 corresponding to a first sewing line of the pocket pattern 610 indicated on the left front body pattern 630 which is the base pattern.

A superimposition condition used by the automatic arrangement device to determine a superimposing pattern may include conditions such as: the size of a target pattern is less than or equal to a preset threshold size, there is a line segment of another pattern sewn to an internal line segment of the target pattern, and the target pattern corresponds to a pattern connected to the superimposing pattern by sewing. For example, when the size of the target pattern (e.g., the pocket pattern 610) is less than or equal to the preset threshold size (e.g., 0.09 m²), the automatic arrangement device may determine the target pattern as a superimposing pattern and excludes it from the automatic arrangement. As another example, when the pocket pattern 610 is one of two symmetrical patterns, the automatic arrangement device may determine the two pocket patterns 610 as superimposing patterns when the sum of areas of the two pocket patterns 610 is less than or equal to a threshold size.

When a line segment (sewing line) of another pattern (e.g., the left front body pattern 630) is sewn onto an internal line segment of the target pattern (e.g., the pocket pattern 610), the automatic arrangement device may determine the target pattern as a superimposing pattern and exclude it from the automatic arrangement. This is because, when there is a pattern (e.g., the left front body pattern 630) to be sewn together with the pocket pattern 610, arranging the pocket pattern 610 along the sewing line of the left front body pattern 630 may be more accurate than performing the automatic arrangement using arrangement points.

When there is another pattern connected to the superimposed pocket pattern 610 by sewing, the automatic arrangement device may determine the other pattern as a superimposing pattern. In addition, when determining the target pattern as a superimposing pattern, the automatic arrangement device may determine whether the target pattern corresponds to any one of symmetrical patterns. For example, the automatic arrangement device may perform the automatic arrangement using arrangement points, without checking the superimposition condition between the symmetrical patterns, such as, between a left arm pattern and a right arm pattern and between a left leg pattern and a right leg pattern.

FIG. 7 includes diagram 700 showing a graphical user interface diagram where symmetrical patterns of a garment are illustrated in a section of the user interface diagram, according to an embodiment. Two patterns of a symmetrical form and facing each other may be referred to herein as "symmetrical patterns." For example, a right front body pattern 710 and a left front body pattern 720, a right back body pattern 730 and a left back body pattern 740, and/or a left sleeve pattern 750 and a right sleeve pattern 760, as shown in FIG. 7, are symmetric patterns. Whether patterns are symmetrical or not may be determined in advance and the result of such determination may be stored as pattern information of a target pattern.

Although a left sleeve pattern A and a right sleeve pattern B are symmetrical patterns, only the left sleeve pattern A may be arranged at arrangement points. In this case, the automatic arrangement device may arrange the right sleeve pattern B, which is symmetrical to the left sleeve pattern A, at arrangement points at positions that are symmetrical to the arrangement points of the left sleeve pattern A. In addition, when there is a right back body pattern C in addition to the left sleeve pattern A among arranged patterns, the automatic arrangement device may arrange the patterns based on a pattern having a higher confidence score between the left sleeve pattern A and the right back body pattern C. For example, the confidence score corresponding to the left sleeve pattern A may be 0.85, and the confidence score corresponding to the right back body pattern C may be 0.92. In this case, the automatic arrangement device may arrange the remaining patterns (e.g., the left sleeve pattern A, the right sleeve pattern B, etc.) based on the right back body pattern C having the higher confidence score. Talking an example where the left sleeve pattern A and the right sleeve pattern B are symmetrical and the confidence score of the left sleeve pattern A is 0.85, and the confidence score of the right sleeve pattern B is 0.64, the automatic arrangement device may arrange the right sleeve pattern B on a 3D avatar 701 by aligning the left and right symmetry of the sleeve patterns based on the left sleeve pattern A having the higher confidence score between the two symmetrical patterns.

The automatic arrangement device may allow one pattern to be arranged at one arrangement point. Arrangement positions of two symmetrical patterns or different patterns may be predicted to be located at the same one arrangement point. In this case, the automatic arrangement device may arrange only a symmetrical pattern having a higher confidence score at the arrangement point or arrange only a symmetrical pattern having a higher confidence score at the arrangement point, and may not arrange a pattern having a lower confidence score. Alternatively, the automatic arrangement device may change an arrangement position of the pattern having the lower confidence score based on an arrangement position of the pattern having the higher confidence score. For example, arrangement positions of symmetrical patterns may be predicted as arrangement points that are not symmetrical to each other. In this case, the automatic arrangement device may not arrange these symmetrical patterns.

Alternatively, a target pattern may correspond to, for example, a portion of a front body plate (Body_Front) or a back body plate (Body_Back) which is an arrangement plate, such as, for example, center front body 2 (Body _Font_Center_2) or right back body 2 (e.g., Body_Back_2_R), as shown in FIG. 4. For example, the target pattern may correspond to a pattern corresponding to a portion (e.g., center front body 2 (Body_Font_Center_2)) of an arrangement plate (e.g., a front body plate (Body_Front)), and there may be no remaining patterns (e.g., center front body 1 (Body_Front_Center_1) and center front body 3 (Body _Front_Center_3)), excluding the center front body 2 (Body_Font_Center_2) pattern, in the front body plate. In this case, the automatic arrangement device may arrange the center front body 2 pattern at a center position of the front body plate. In this case, the automatic arrangement device may change the name of the center front body 2 pattern arranged at the center position of the front body plate to a "center front body" pattern, for example.

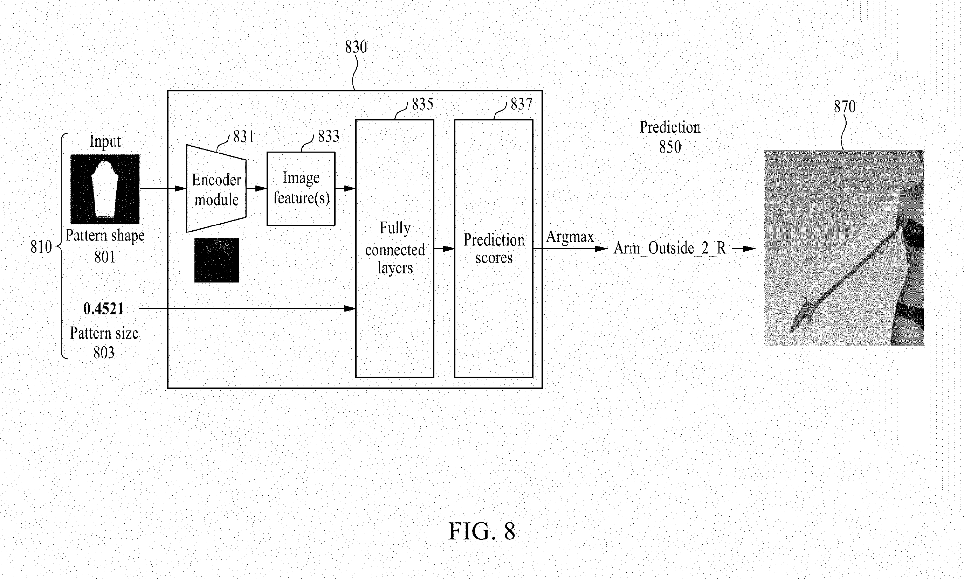

FIG. 8 is a block diagram of a neural network model 830 for determining an arrangement point of a single pattern is input using pattern information, according to an embodiment. FIG. 8 shows the neural network model 830 using a right arm pattern 801 as an input. The neural network model 830 may include, among other components, an encoder module 831 and fully connected layers 835.

The neural network model 830 may extract features (e.g., image features) 833 from a pattern shape 801 through the encoder module 831. The encoder module 851 may be, for example, EfficientNet V2 using a reinforcement learning-based neural architecture search (NAS) method. The encoder module 831 may use dropout that leaves some of neurons in a non-trainable state, and use, in addition to this, a RandAugment technique that randomly selects various image distortion methods and applies them at random strength and a Mixup technique that merges two different images to extract the image features 833 from the pattern shape 801.

The neural network model 830 may classify right arm pattern X by applying the image features 833 and pattern size 803 to the fully connected layers 835. In this case, the fully connected layers 835 may output prediction scores 837 corresponding to different classes (e.g., 109 arrangement points) predicted for the right arm pattern X. The neural network model 830 may output, as a prediction result 850, an index (or factor) corresponding to a prediction score having that highest value among the prediction scores 837 through an Argmax function. The prediction result 850 of the neural network model 830 may correspond to an arrangement point name (e.g., Arm_Outside_2_R) predicted in response to the input pattern. The highest prediction score may be used as a confidence score described above with reference to a post-processing process and the automatic arrangement. The automatic arrangement device may arrange one pattern (e.g., the right arm pattern) on a 3D avatar as shown in reference numeral 870 according to the prediction result 850 of the neural network model 830, that is, the predicted arrangement point name (e.g., Arm_Outside_2_R).

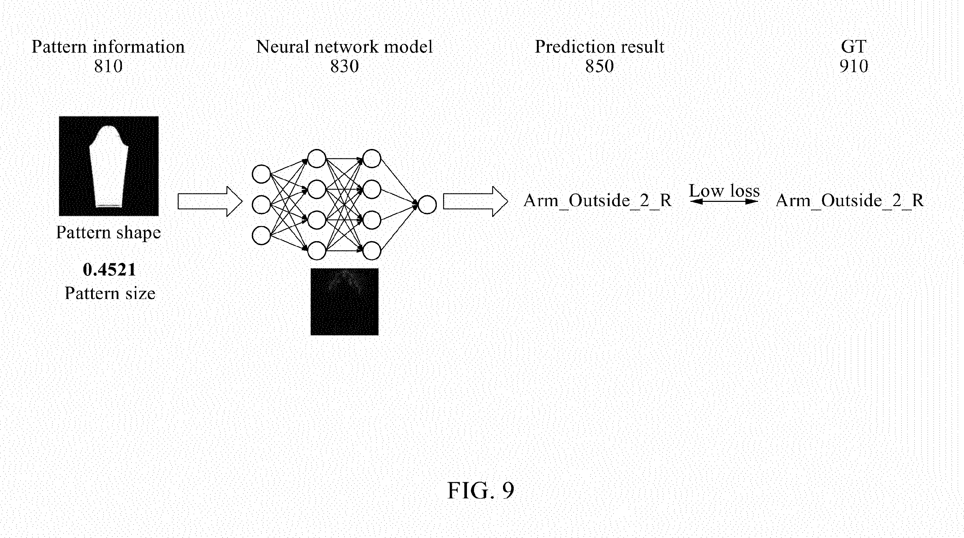

FIG. 9 is a conceptual diagram illustrating training of neural network model 830 of FIG. 8 using pattern information, according to an embodiment. The automatic arrangement device may train the neural network model 830 based on a first loss which is a difference between an arrangement point name (e.g., Arm_Outside_2_R) that is the prediction result 850 of the neural network model 830 obtained through the process described above with reference to FIG. 8 and an arrangement point name (e.g. Arm_Outside_2_R) that is a ground truth (GT) 910. The GT arrangement point names indicate correct arrangement points. The automatic arrangement device may train the neural network model 830 by backpropagating the first loss. For example, as shown in FIG. 9, when the prediction result 850 (e.g., Arm_Outside_2_R) of the neural network model 830 is the same as the GT 910 (e.g., Arm_Outside_2_R), the first loss may be absent or extremely small, and thus the automatic arrangement device may maintain weights or parameters of the neural network model 830 without a change. Conversely, when the prediction result 850 and the GT 910 are different, as in the case where the prediction result 850 is Leg_Back_R and the GT 910 is Leg_Back_L, the first loss may be large. In this case, the automatic arrangement device may update the weights or parameters of the neural network model 830 by backpropagating the first loss to decrease the error.

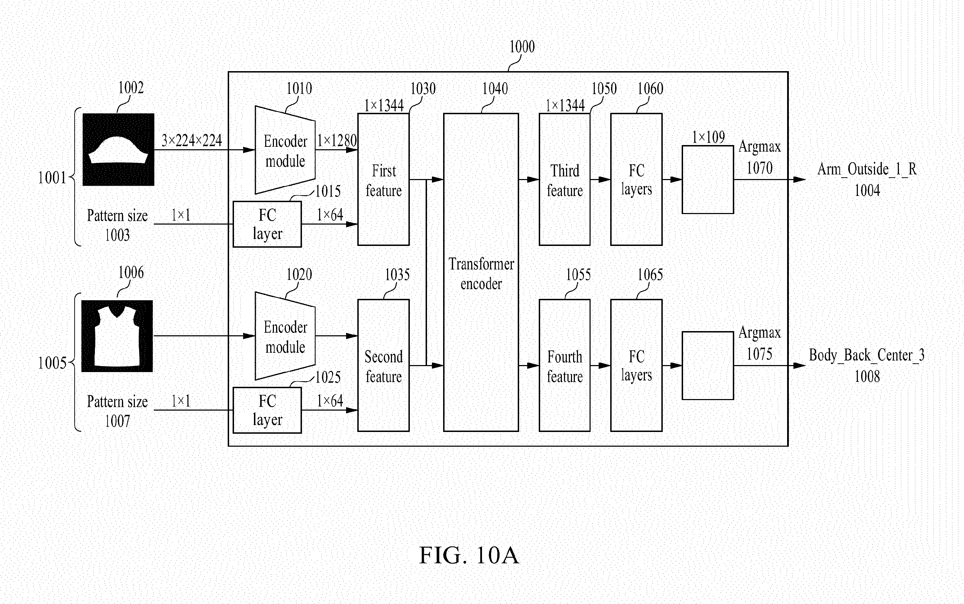

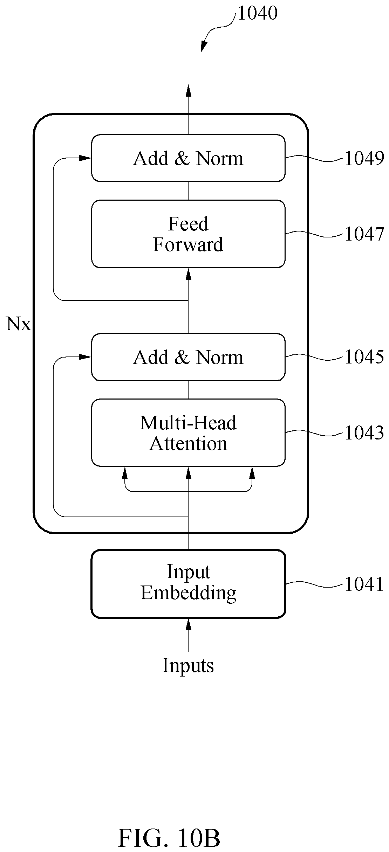

FIGS. 10A and 10B are block diagrams of a neural network model 1000 for determining arrangement points of multiple patterns simultaneously, according to an embodiment. FIG. 10A shows a structure of a neural network model 1000 receiving pattern information (e.g., pattern information 1001 of pattern 1 and pattern information 1005 of pattern 2) for each pattern of a garment H. The neural network model 1000 may include, among other components, encoder modules 1010, 1020 receiving patterns 1 and 2, respectively, first fully connected layers (or FC layers) 1015,1025, a transformer encoder 1040, and second fully connected layers 1060 and 1065. The encoder modules 1010 and 1020 may be, for example, convolutional neural network (CNN)-based Efficient NetV2.

The pattern information (e.g., 1001 and 1005) for each pattern may be provided to the neural network model 1000. The pattern information (e.g., 1001 and 1005) for each pattern may include the shape (e.g., 1002 and 1006) and its size (e.g., 1003 and 1007). That is, the pattern information 1001 of pattern 1 (e.g., a right sleeve pattern) may include information about the shape 1002 of pattern 1 and the size 1003 of pattern 1. For example, the shape 1002 of pattern 1 may be provided in the form of a pattern image of a size of 3 channels × 224 × 224 pixels including the shape of the right sleeve pattern. The pattern size 1003 of pattern 1 may be, for example, a vector of 1 channel × 1 dimension. In addition, the pattern information 1005 of pattern 2 (e.g., an upper front body pattern) may include information about the shape 1006 of pattern 2 and the size 1007 of pattern 2. The shape 1006 of pattern 2 may be input in the form of a pattern image of a size of 3 channels × 224 × 224 pixels including the shape of the upper front body pattern. Similarly, the size 1007 of pattern 2 may also be, for example, a vector of 1 channel × 1 dimension.

The neural network model 1000 may extract 1-1 feature of 1 × 1280 channels from the shape 1002 of pattern 1 through the encoder module 1010, and extract 1-2 feature of 1 × 64 channels from the size 1003 of pattern 1 through the first fully connected layer 1015. The neural network model 1000 may generate a first feature 1030 of 1 × 1344 channels corresponding to pattern 1 by concatenating the 1-1 feature of the 1 × 1280 channels and the 1-2 feature of the 1 × 64 channels. In addition, the neural network model 1000 may extract 2-1 feature of 1 × 1280 channels from the shape 1006 of pattern 2 through the encoder module 1020, and extract 2-2 feature of 1 × 64 channels from the size 1007 of pattern 2 through the first fully connected layer 1025. The neural network model 1000 may generate a second feature 1035 of 1 × 1344 channels corresponding to pattern 2 by concatenating the 2-1 feature of the 1 × 1280 channels and the 2-2 feature of the 1 × 64 channels.

The neural network model 1000 may apply, to the transformer encoder 1040, the first feature 1030 of the 1 × 1344 channels corresponding to pattern 1 and the second feature 1035 of the 1 × 1344 channels corresponding to pattern 2. The transformer encoder 1040 may include, for example, a multi-head attention layer and two fully connected layers (or FC layers), but is not necessarily limited thereto. An example structure and operations of the transformer encoder 1040 are described in detail below with reference to FIG. 10B.

The neural network model 1000 may classify a third feature 1050 and a fourth feature 1055 in which information of other patterns of the garment H is encoded from the first feature 1030 and the second feature 1035 through the transformer encoder 1040. The third feature 1050 and the fourth feature 1055 may each have the size of 1 × 1344 channels, as in the first feature 1030 and the second feature 1035. However, the third feature 1050 and the fourth feature 1055 may be different from the first feature 1030 and the second feature 1035 in that features of other patterns of the garment H are reflected in the third feature 1050 and the fourth feature 1055 whereas the first feature 1030 and the second feature 1035 include information from respective patterns. That is, the transformer encoder 1040 uses the third feature 1050 embedded with information reflecting the features of pattern 1 and pattern 2 to indicate interrelationship between pattern 1 and pattern 2. In addition, the transformer encoder 1040 may classify embedded information in which the features of pattern 1 and pattern 2 are reflected in the fourth feature 1055, and the fourth feature 1055 may include information about the interrelationship between pattern 1 and pattern 2.

The neural network model 1000 may apply the third feature 1050 to the second fully connected layers 1060 to output prediction scores 1070 corresponding to different classes (e.g., 109 arrangement points) predicted for pattern 1. The neural network model 1000 may also apply the third feature 1050 to the second fully connected layers 1060 to output the prediction scores 1070 corresponding to different upper classes (e.g., 10 upper arrangement points) predicted for pattern 1. The neural network model 1000 may output, as a prediction result 1004, an index (or factor) corresponding to one prediction score having the highest value among the prediction scores 1070 through an Argmax function. The prediction result 1004 may correspond to a predicted arrangement point name (e.g., Arm_Outside_1_R) corresponding to input pattern 1. The highest prediction scores 1070 may be a confidence score corresponding to pattern 1.

In addition, the neural network model 1000 may apply the fourth feature 1055 to the second fully connected layers 1065 to output prediction scores 1075 corresponding to different classes (e.g., 109 arrangement points) predicted for pattern 2. The neural network model 1000 may also apply the fourth feature 1055 to the second fully connected layers 1065 to output the prediction scores 1075 corresponding to different upper classes (e.g., 10 upper arrangement points) predicted for pattern 2. Among the prediction scores 1075, the one with the highest value may be a confidence score corresponding to pattern 2.

The neural network model 1000 may output, as a prediction result 1008, an index (or factor) corresponding to the highest prediction score through an Argmax function. The prediction result 1008 may correspond to a predicted arrangement point name (e.g., Body_Back_Center_3) corresponding to input pattern 2. In this case, the highest prediction score corresponding to pattern 1 and the highest prediction score corresponding to pattern 2, that is, the prediction score of the index corresponding to the arrangement point name (e.g. Arm_Outside_1_R) and the prediction score of the index corresponding to the arrangement point name (e.g., Body_Back_Center_3) may be used as the confidence scores of corresponding patterns for use in t a post-processing process and an automatic arrangement.

FIG. 10B shows a structure of the transformer encoder 1040 according to an embodiment. The neural network model 1000 may calculate an input embedding vector 1041 corresponding to input values such as the first feature 1030 and the second feature 1035 described above and apply the input embedding vector 1041 to the transformer encoder 1040.

The transformer encoder 1040 may include N stack unit blocks where each unit block includes a multi-head attention layer 1043, an addition and normalization block (Add & Norm) 1045, a feed-forward layer 1047, and an addition and normalization block (Add & Norm) 1049. N is, for example, 6. The output from a unit block at a lower level of the stack is sent to another unit block at a higher level of the stack. In the multi-head attention layer 1043, multiple heads may independently perform self-attention multiple times.

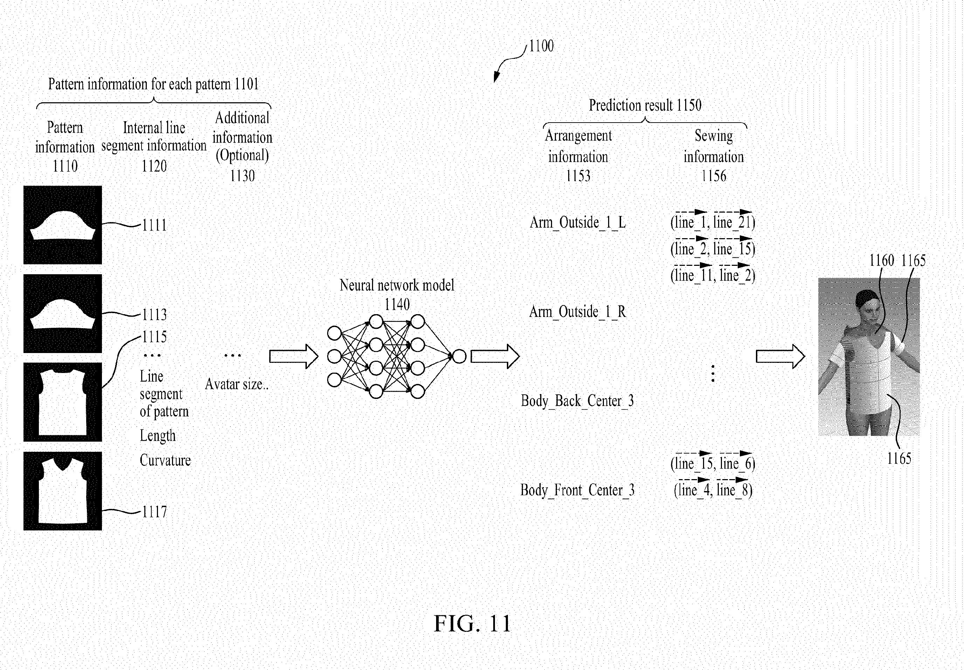

FIG. 11 is a conceptual diagram illustrating using a neural network model on pattern information, internal line segment information, and additional information of a plurality of patterns, according to an embodiment. Drawing 1100 shows providing input information 1101 of a single garment T to the automatic arrangement device, followed by a neural network model 1140 generating a prediction result 1150 by processing the input information 1101, and the automatic arrangement device arranging the patterns 1165 at arrangement points of a 3D avatar 1160 according to the prediction result 1150.

The input information 1101 may include pattern information may include, among others, pattern information 1110 for each of the plurality of patterns (e.g., a left sleeve pattern, a right sleeve pattern, a back body pattern, and a front body pattern) of garment T, internal line segment information 1120, and supplemental information 1130. The internal line segment information is also referred to herein as "line information." As illustrated in FIG. 11, pattern information 1111 corresponds to the left sleeve pattern of the garment T, and pattern information 1113 corresponds to the right sleeve pattern of the garment T., pattern information 1115 corresponds to the back body pattern of the garment T, and pattern information 1117 corresponds to the front body pattern of the garment T. The pattern information 1110 may include information on the configuration of each pattern (e.g., shape and size of the pattern) and also include additional information such as symmetry information of the patterns, and the number of the patterns. As described above, the shape of each of the plurality of patterns may be provided in the form of a pattern image including a visual representation of each of the plurality of patterns.

To facilitate the processing by neural network model 1140, the automatic arrangement device may fill a remaining blank portion of a pattern image other than a pattern shape (displayed in white) with black pixels such that the pattern image corresponding to each of the plurality of patterns has a size of 512 × 512 pixels. The automatic arrangement device may normalize a pattern image using an average and/or standard deviation of pattern images stored in a pattern DB. Alternatively, the automatic arrangement device may resize a pattern image corresponding to each of the plurality of patterns into an image having a size of, for example, 224 × 224 pixels, for transfer learning described above. For example, when the pattern information 1111 corresponds to the right sleeve pattern and the pattern information 1113 corresponds to the left sleeve pattern, the pattern information 1111 and pattern information 1113 may include information indicating that the right sleeve pattern and the left sleeve pattern are symmetrical. In addition, the number of patterns may refer to a total number of target patterns constituting one garment.

The internal line segment information 1120 may include information as to whether line segments (e.g., notches, sewing lines, cut lines, dart lines, and style lines) are present inside each of the plurality of patterns. The internal line segment information 1120 may also indicate the length and curvature of each of the line segments. The internal line segment information 1120 may also include identification information indicating which of the patterns a line segment belongs to.

The supplemental information 1130 may include, for example, the size of a 3D avatar on which a 3D garment formed with a plurality of patterns is worn, positions of arrangement points combined with the plurality of patterns in the 3D avatar, and the size of an arrangement plate including the arrangement points.

The neural network model 1140 may extract features corresponding to the patterns from the input information 1101. The neural network model 1140 may then use the extracted features to calculate each pattern's prediction scores corresponding to classes of 109 arrangement points. The neural network model 1140 may output arrangement information 1153 and sewing information 1156 of an arrangement point with the highest prediction score as the prediction result 1150 through an Argmax function. For each of the patterns, one of the prediction scores having the highest value is set as a confidence score of the pattern.

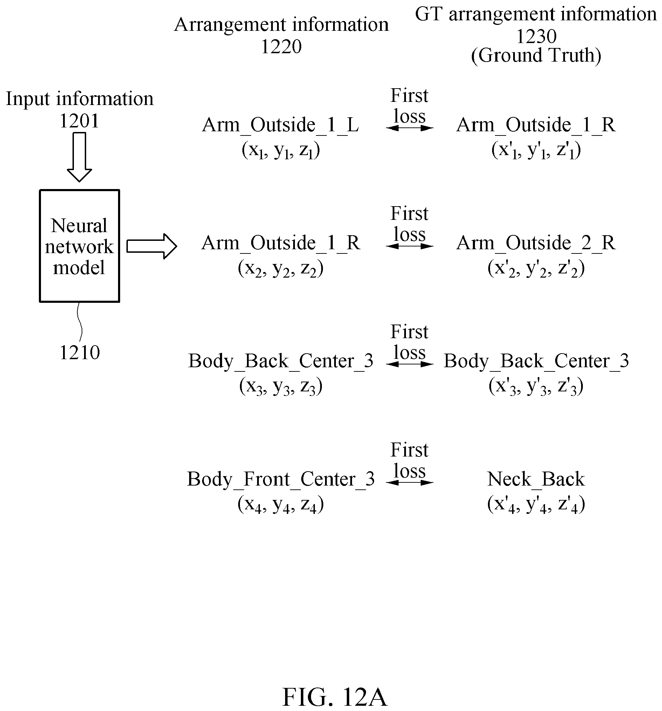

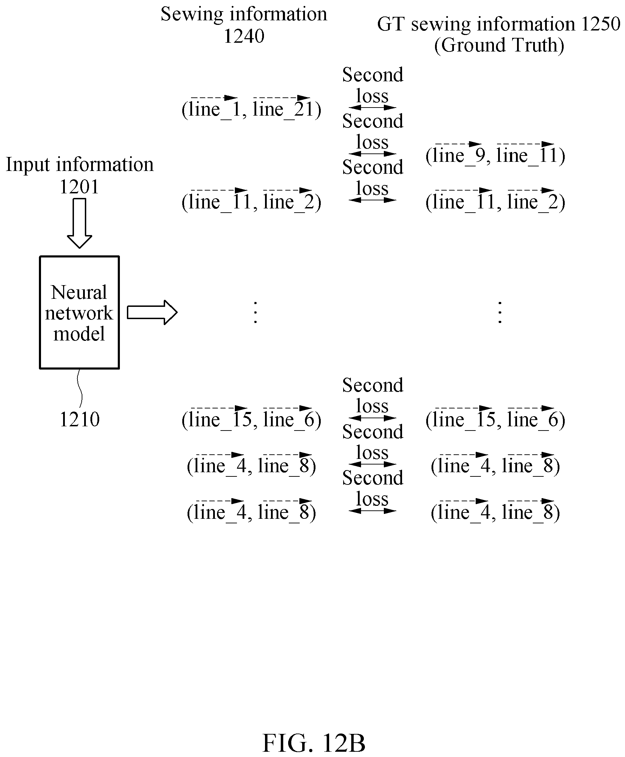

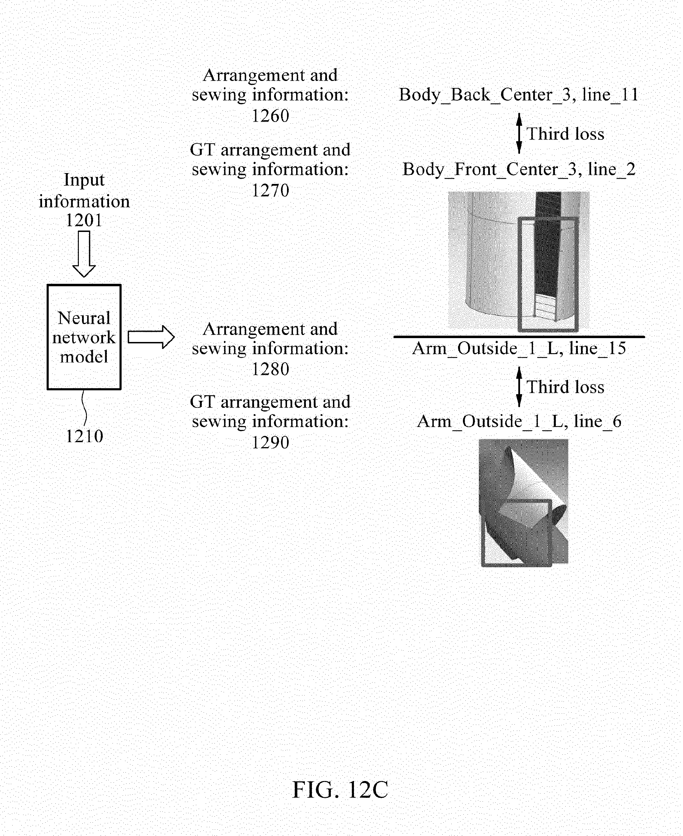

The neural network model 1140 may be trained to predict the arrangement information 1153 about arrangement points at which patterns are to be arranged based on confidence scores calculated based on pattern information 1110 for each of the patterns, and the sewing information 1156 including pairs of line segments to be sewn together in sewing directions of line segments to be sewn to each other. For example, the neural network model 1140 may be trained based on a second loss which is a difference between predicted sewing information (including information as to whether there are line segments to be sewn together and sewing directions of the line segments) and ground truth (GT) sewing information corresponding to the line segments to be sewed to each other. The ground truth indicates the correct sewing information. A method of training the neural network model 1140 is described in detail below with reference to FIG. 12.

The arrangement information 1153 may indicate arrangement point names (e.g., Arm_Outside_1_L, Arm_Outside_1_R, Body_Back_Center_3, and Body_Front_Center_3) predicted from the pattern information 1101. The sewing information 1156 may include a pair of line segments to be sewn together, and sewing directions of the line segments to be sewn together. For example, the sewing information 1156 may be represented in the form (e.g.,, (l̅i̅n̅e̅_̅1̅5̅, l̅i̅n̅e̅_̅6̅)̅) including identification information (line_15, line_6) of (internal) line segments to be sewn to each other and arrows indicating directions in which the line segments are to be sewn together. Example sewing information (l̅i̅n̅e̅_̅1̅5̅, l̅i̅n̅e̅_̅6̅) may indicate that line 15 and line 6 are to be sewn to each other in a right direction from a start point of line 15 and a start point of line 6. In addition, example sewing information (l̅i̅n̅e̅_̅1̅5̅, l̅i̅n̅e̅_̅6̅) may indicate that line 15 and line 6 are to be sewn to each other based on the start point of line 15 and an end point of line 6, that is, the start point of line 15 and the end point of line 6 are to be sewn together.

The automatic arrangement device may arrange the plurality of patterns 1165 on the 3D avatar 1160 based on the predicted arrangement information 1153. The automatic arrangement device may also sew the plurality of patterns 1165 arranged on the 3D avatar 1160 according to the sewing information 1156.

FIGS. 12A, 12B, and 12C are conceptual diagrams illustrating training of the neural network model of FIG. 11, according to an embodiment. FIG. 12A is a conceptual diagram illustrating training of a neural network model 1210 based on a first loss between arrangement information 1220 of patterns predicted in response to input information 1201 (e.g., pattern information for each pattern) and ground truth (GT) arrangement information 1230 corresponding to the patterns. The GT arrangement information 1230 may be indicated in the form of GT labels corresponding to arrangement points at which patterns are to be arranged.

The neural network model 1210 may be trained to reduce the first loss between the predicted arrangement information 1220 for each pattern and the GT arrangement information 1230 by backpropagating the first loss. The first loss is obtained by applying the arrangement information 1220 and GT arrangement information to a first loss function. For example, the arrangement information 1220 may be names of arrangement points (e.g., Arm_Outside_1_L or Arm_Outside_1_R), 3D position coordinates (e.g., x₁, y₁, z₁) of the arrangement points, or an offset value indicating x-, y-, and z-axis movements from a specific point on 3D position coordinates. When the arrangement information 1220 predicted by the neural network model 1210 is Arm_Outside_1_L and the GT arrangement information 1230 is Arm_Outside_1_R, or the predicted arrangement information 1220 is Body_Front_Center_3 and the GT arrangement information 1230 is different, for example, Neck_Back, the first loss may be increased. In this case, the automatic arrangement device or a training device may adjust or update parameters of the neural network model 1210 by backpropagating the first loss.

Alternatively, when the arrangement information 1220 predicted by the neural network model 1210 is Body_Back_Center_3 and the GT arrangement information 1230 is the same as Body_Back_Center_3, the first loss may have a value of zero or a similarly low value. In this case, the automatic arrangement device or the training device may maintain the parameters or weights of the neural network model 1210 without a change.

FIG. 12B is a conceptual diagram illustrating the neural network model 1210 trained based on a second loss between sewing information 1240 predicted in response to input information 1201 and ground truth GT sewing information 1250. The neural network model 1210 may be trained based on the second loss between the sewing information 1240 predicted for each pattern and the GT sewing information 1250. In this case, the sewing information 1240 may include information as to whether there are line segments to be sewn to each other between patterns and sewing directions of the line segments to be sewn to each other.

The neural network model 1210 may be trained by backpropagating the second loss between the predicted sewing information 1240 and the GT sewing information 1250 corresponding to the line segments to be sewn to each other. For example, when the sewing information 1240 predicted by the neural network model 1210 is (l̅i̅n̅e̅_̅1̅, l̅i̅n̅e̅_̅2̅1̅) but (i) the GT sewing information 1250 is not present, (ii) the GT sewing information 1250 is present but the sewing information 1240 predicted by the neural network model 1210 is not present), or (iii) sewing is incorrectly predicted, such cases may indicate a significant error in a prediction result of the neural network model 1210. In such cases, since the second loss has a great value, the training device or the automatic arrangement device may adjust or update the parameters or weights of the neural network model 1210 by backpropagating the second loss.

As another example, when the sewing information 1240 predicted by the neural network model 1210 is (l̅i̅n̅e̅_̅1̅5̅, l̅i̅n̅e̅_̅6̅), this indicate that a sewing start point of line segment 15 and a sewing start point of line segment 6 are to be sewn together. If the arrows point in different directions as (l̅i̅n̅e̅_̅1̅5̅, l̅i̅n̅e̅_̅6̅), it may indicate that the sewing start point of line segment 15 and a sewing end point of line segment 6 are to be sewn together. Therefore, when the predicted sewing information 1240 is (l̅i̅n̅e̅_̅1̅5̅, l̅i̅n̅e̅_̅6̅) and the GT sewing information 1250 is (l̅i̅n̅e̅_̅1̅5̅, l̅i̅n̅e̅_̅6̅), the result indicates that a reversed sewing direction is predicted. In this case, since the second loss has a great value, the training device or the automatic arrangement device may adjust or update the parameters or weights of the neural network model 1210 by backpropagating the second loss to decrease the prediction error. Conversely, when both the presence or absence of sewing and the sewing direction are accurately predicted, the second loss may have a small value, and thus the automatic arrangement device or the training device may maintain the parameters or weights of the neural network model 1210 without a change.

FIG. 12C is a conceptual diagram illustrating a neural network model 1210 trained based on a third loss between arrangement and sewing information 1260, 1280 (predicted in response to input information 1201) and ground truth (GT) arrangement and sewing information 1270, 1290. The neural network model 1210 may be trained based on the third loss which is difference predicted sewing information (e.g., the length between line segments of patterns to be sewn together) of patterns to be sewn together according to predicted arrangement information (e.g., arrangement points) and ground truth (GT) sewing information and arrangement information.

In this case, the arrangement and sewing information 1260, 1280 may indicate a length (or gap) between a line segment (e.g., sewing line 1) of patterns arranged according to the sewing information predicted by the neural network model 1210 and a line segment (e.g., sewing line 2) of patterns to be sewn together with the line segment (e.g., sewing line 1), after the patterns are arranged according to the arrangement information (e.g., arrangement points) predicted by the neural network model 1210. As shown in FIG. 12C, as the length (gap) between sewing line 1 and sewing line 2 shown in a box increases (becomes longer), the third loss may increase, and as the length (gap) between sewing line 1 and sewing line 2 decreases (becomes shorter), the third loss may decrease. The automatic arrangement device or the training device may update or adjust the parameters or weights of the neural network model 1210 by backpropagating the third loss to reduce the prediction error.

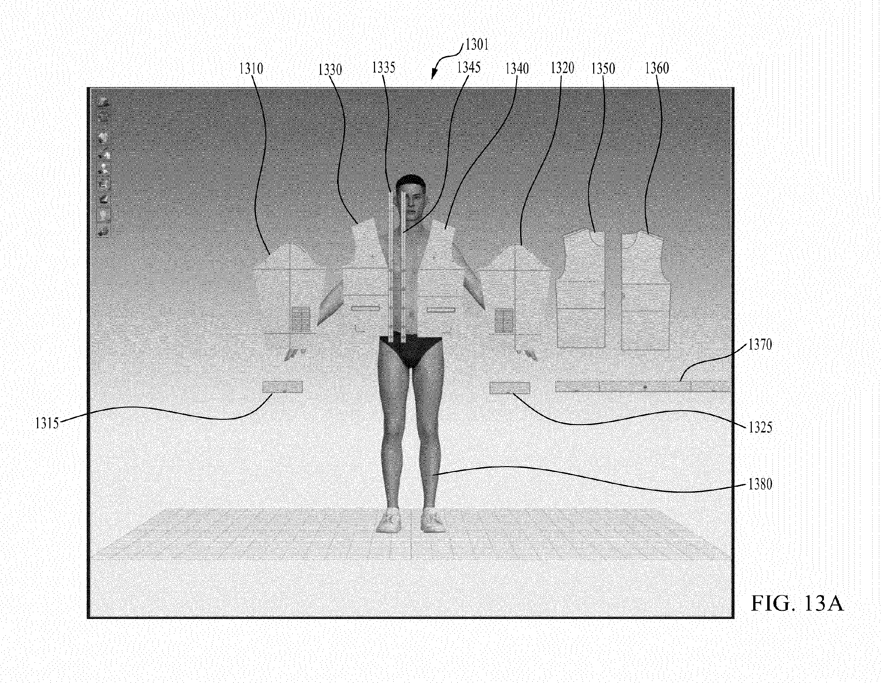

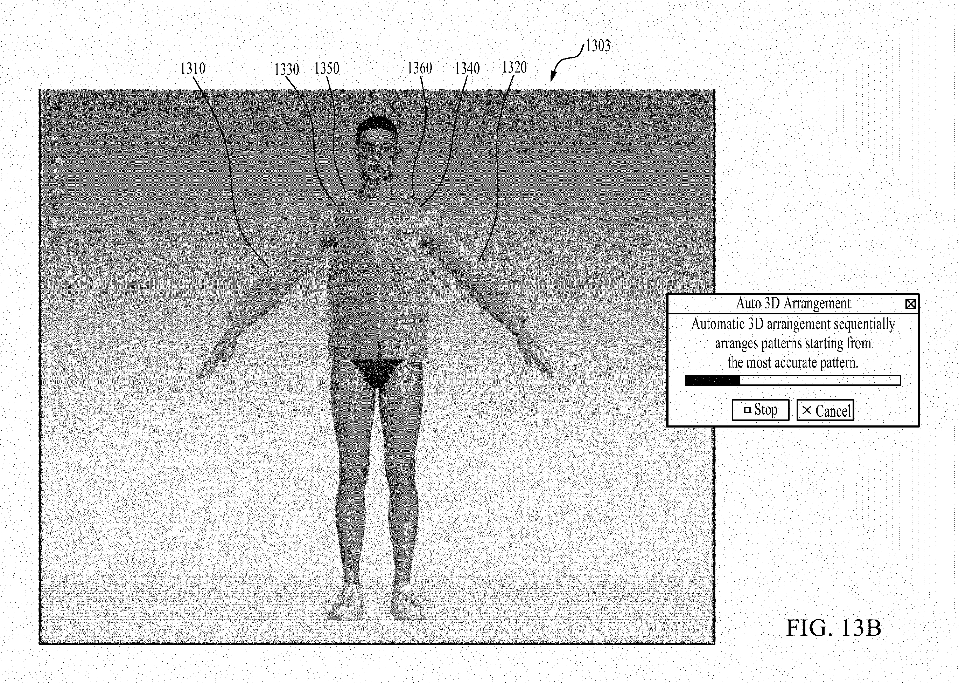

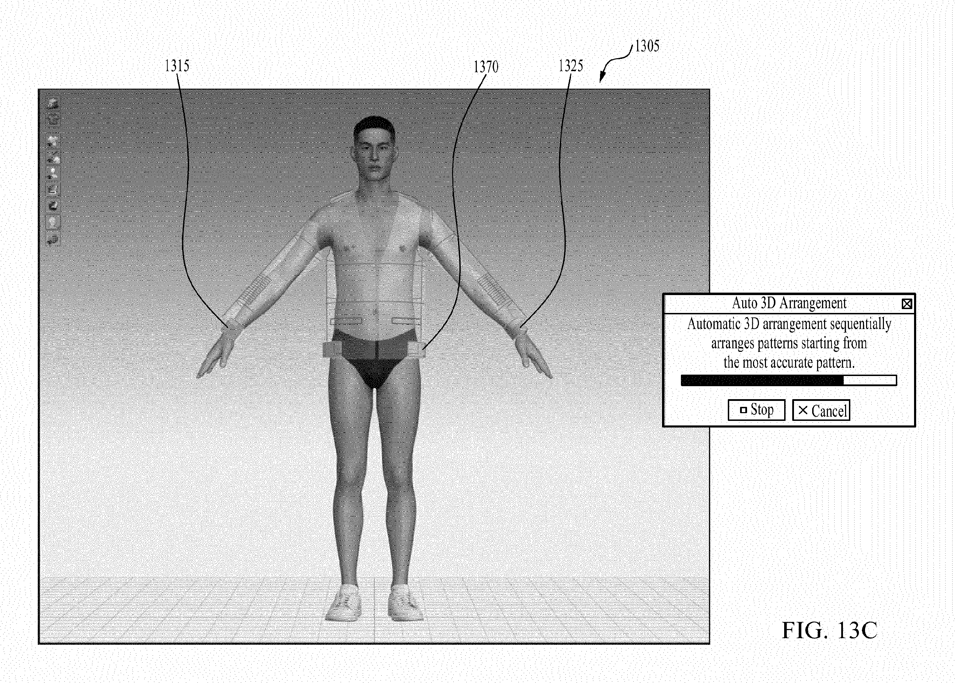

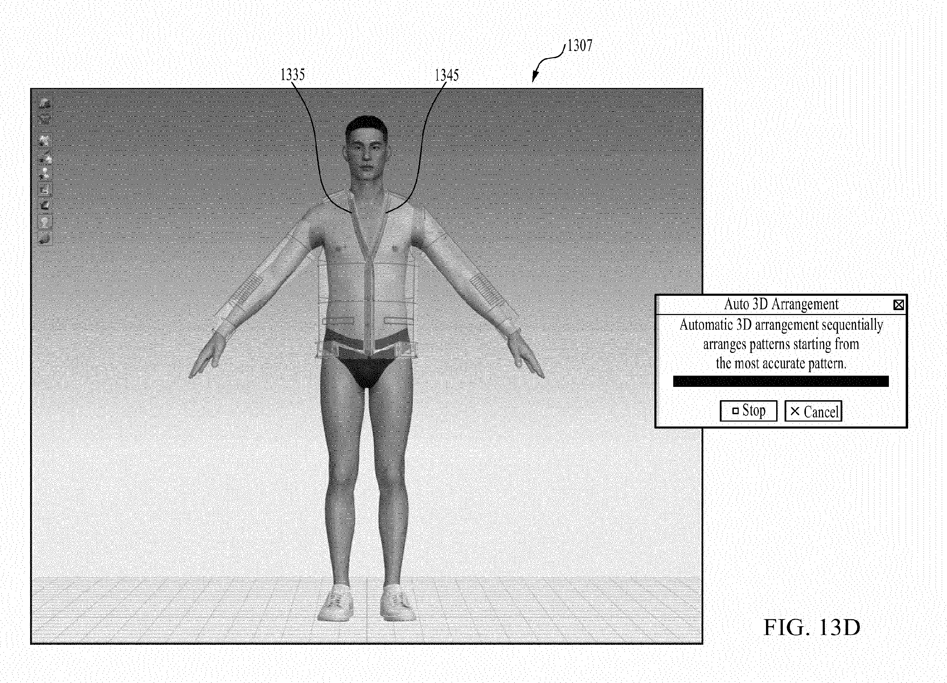

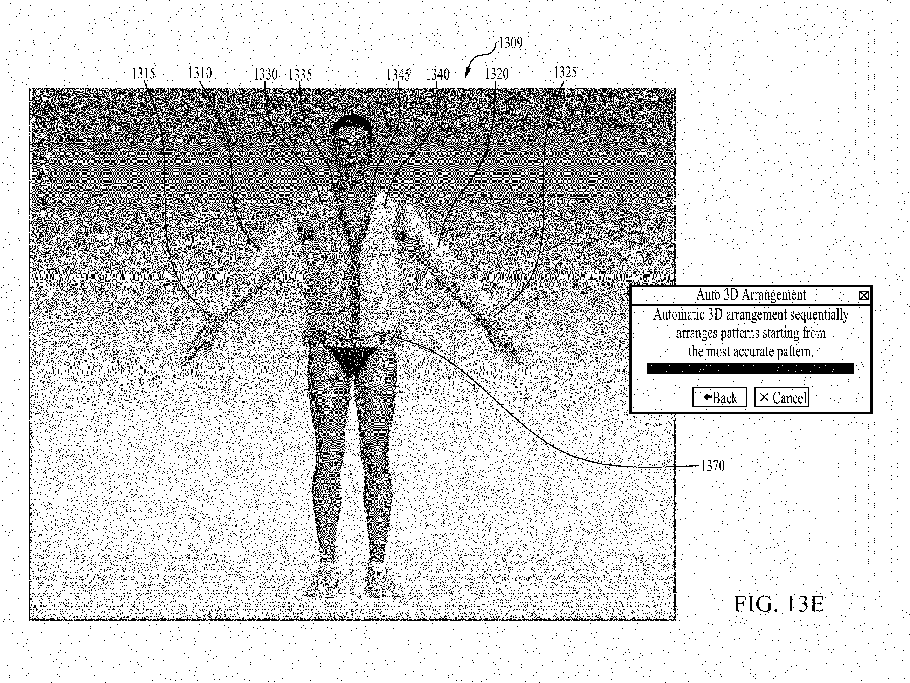

FIGS. 13A, 13B, 13C, 13D, and 13E are a sequence of user interface diagrams illustrating a process of automatically arranging patterns on a 3D avatar, according to an embodiment. Screen images 1301, 1303, 1305, 1307, and 1309 show in sequence a process in which the automatic arrangement is performed, when a user selects an automatic arrangement for a garment X (e.g., a man's top) through the automatic arrangement device. For example, when the user selects the automatic arrangement to be performed on the garment X (e.g., a man's top), the automatic arrangement device may display a plurality of patterns (e.g., a right arm pattern 1310, a right sleeve pattern 1315, a left arm pattern 1320, a left sleeve pattern 1325, a right front body pattern 1330, a right collar pattern 1335, a left front body pattern 1340, a left collar pattern 1345, a right back body pattern 1350, a left back body pattern 1360, and a waist pattern 1370) that constitutes the garment X, together with a male avatar 1380, as shown in the screen image 1301 of FIG. 13A.

As the automatic arrangement is performed, the automatic arrangement device may determine whether there is a superimposing pattern that satisfies a superimposition condition described above from among the plurality of patterns 1310, 1315, 1320, 1325, 1330, 1335, 1340, 1345, 1350, 1360, 1370. For example, when the respective sizes of the right sleeve pattern 1315, the left sleeve pattern 1325, the right collar pattern 1335, and the left collar pattern 1345 are less than or equal to a preset threshold size, or there is a line segment of another pattern sewn to an internal line segment of a target pattern, the superimposition condition may be satisfied. When the superimposition condition is satisfied, the automatic arrangement device may determine the patterns 1315, 1325, 1335, 1345 that satisfy the superimposition condition to be superimposing patterns and exclude them from the automatic arrangement. After the automatic arrangement of base patterns corresponding to the superimposing patterns 1315, 1325, 1335, 1345 is completed, the superimposing patterns 1315, 1325, 1335, 1345 may be arranged by superimposing over the corresponding base patterns.

When the superimposing patterns 1315, 1325, 1335, 1345 are determined, the automatic arrangement device may calculate a confidence score corresponding to each of patterns other than the superimposing patterns 1315, 1325, 1335, 1345 through a neural network model. The automatic arrangement device may arrange the patterns at arrangement points on the male avatar 1380 based on the confidence score. In this case, the automatic arrangement device may arrange patterns having a high confidence score and/or patterns having a large area with a higher priority. The patterns with high confidence scores indicate a high prediction accuracy of the neural network model.

For example, among the plurality of patterns 1310, 1315, 1320, 1325, 1330, 1335, 1340, 1345, 1350, 1360, 1370 that constitutes the garment X, the right front body pattern 1330 may have the highest confidence score. In this case, the automatic arrangement device may first arrange the right front body pattern 1330 on the male avatar 1380 and may then determine whether there is a pattern that is symmetrical to the right front body pattern 1330. The automatic arrangement device may determine information about symmetrical patterns that are symmetrical to each other from pattern information corresponding to the plurality of patterns. When there is a pattern (e.g., the left front body pattern 1340) that is symmetrical to the right front body pattern 1330 among the plurality of patterns 1310, 1315, 1320, 1325, 1330, 1335, 1340, 1345, 1350, 1360, 1370, the automatic arrangement device may arrange the left front body pattern 1340 at a position symmetrical to the right front body pattern 1330 on the male avatar 1380.

Subsequently, the automatic arrangement device may find and sequentially arrange patterns next high higher confidence scores among remaining patterns (excluding the right front body pattern 1330 and the left front body pattern 1340). For example, the right arm pattern 1310 may have a confidence score of 0.89, the left arm pattern 1320 may have a confidence score of 0.75, the right back body pattern 1350 may have a confidence score of 0.68, and the left back body pattern 1360 may have a confidence score of 0.92. In this case, the automatic arrangement device may arrange the right back body pattern 1350 symmetrical to the left back body pattern 1360, based on the left back body pattern 1360 having the highest confidence score which is 0.92 among the remaining patterns. When the confidence score 0.68 of the right back body pattern 1350 is less than a threshold confidence value set by the user, the automatic arrangement device may not arrange the right back body pattern 1350 even though the right back body pattern 1350 is a symmetrical patten corresponding to the left back body pattern 1360. When the threshold confidence value is set to 0.7 by the user, the automatic arrangement device may not automatically arrange the right back body pattern 1350 on the male avatar 1380. However, when the threshold confidence value is set to 0.65 by the user, the automatic arrangement device may automatically arrange the right back body pattern 1350 on the male avatar 1380.

Once the arrangement of the left back body pattern 1360 and the right back body pattern 1350 is completed, the automatic arrangement device may arrange the right arm pattern 1310 having the next highest confidence score and may then arrange the left arm pattern 1320 at a position symmetrical to the position of the right arm pattern 1310.

Through the preceding process, the automatic arrangement may be performed on the patterns 1310, 1320, 1330, 1340, 1350, 1360 as shown in the screen image 1303 of FIG. 13B. Subsequently, the automatic arrangement device may arrange the superimposing patterns 1315, 1325, 1335, 1345 by superimposing them on the base patterns, as shown in the screen image 1305 of FIG. 13C and the screen image 1307 of FIG. 13D.

The automatic arrangement device may superimpose the right sleeve pattern 1315, the left sleeve pattern 1325, and the waist pattern 1370, which are relatively large in size, as shown in the screen image 1305, and may then superimpose remaining superimposing patterns (e.g., the right collar pattern 1335 and the left collar pattern 1345) as shown in screen image 1307. Through such process, the patterns 1310, 1315, 1320, 1325, 1330, 1335, 1340, 1345, 1350, 1360, 1370 are finally arranged on the male avatar 1380 as displayed in the screen image 1309 of FIG. 13E.

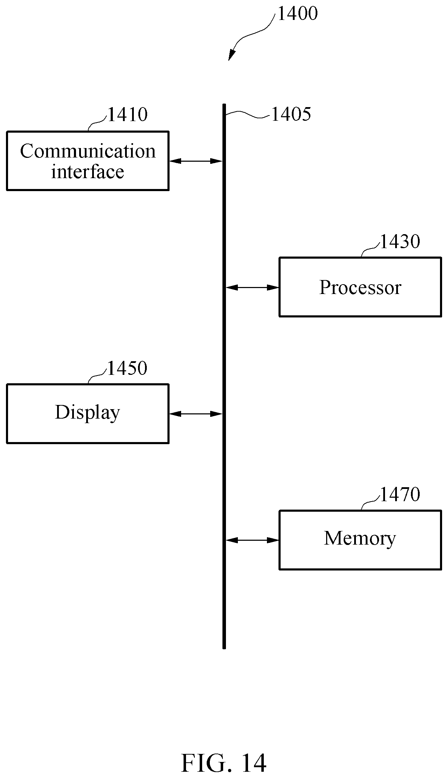

FIG. 14 illustrates an automatic arrangement device according to an embodiment. Referring to FIG. 14, an automatic arrangement device 1400 may include, among other components, a communication interface 1410, a processor 1430, an output device 1450, and a memory 1470. The communication interface 1410, the processor 1430, the output device 1450, and the memory 1470 may be connected to each other via a communication bus 1405.

The communication interface 1410 may receive pattern information for each pattern, including the shapes and sizes of patterns constituting a garment.

The processor 1430 may predict arrangement points at which the patterns are to be initially arranged on a 3D avatar by applying the pattern information for each pattern to a neural network model. In this case, the neural network model may be trained to classify and arrange the patterns based on confidence scores calculated based on the pattern information for each pattern received through the communication interface 1410. For example, the neural network model may extract features from the pattern information for each pattern. The neural network model may calculate a confidence score for each of the patterns using the features and the sizes of the patterns. The neural network model may predict at least one of the names or 3D positions of the arrangement points, based on the confidence score for each pattern.

The processor 1430 may predict arrangement points at which remaining patterns are to be initially arranged by applying pattern information of the remaining patterns excluding a target pattern to the neural network model based on whether the target pattern among the patterns satisfies a superimposition condition.

The processor 1430 may arrange the patterns on the 3D avatar based on the predicted arrangement points. The processor 1430 may arrange the patterns at the arrangement points based on at least one of whether the patterns are symmetrical patterns that are symmetrical to each other, whether there is sewing between the patterns, confidence scores corresponding to the patterns, or the sizes of the patterns.

The processor 1430 may determine whether the target pattern among the patterns corresponds to the symmetrical patterns that are symmetrical to each other. When it is determined that the target pattern corresponds to a first symmetrical pattern among the symmetrical patterns, the processor 1430 may arrange the first symmetrical pattern and a second symmetrical pattern that is symmetrical to the first symmetrical pattern at arrangement points symmetrical to each other on the 3D avatar.

The output device 1450 may output a result obtained by the processor 1430 by arranging the patterns at the arrangement points of the 3D avatar. The output device 1450 may explicitly or implicitly output the result of arranging the patterns at the arrangement points. According to an embodiment, "explicitly outputting" a result of arranging patterns at arrangement points may include, for example, displaying arrangement positions or coordinates of the patterns directly through an output device panel, and/or outputting them on paper and the like. Alternatively, "implicitly outputting" a result of arranging patterns at arrangement points may include, for example, displaying a result of simulating a 3D garment produced according to the result of arranging the patterns, or displaying a result of simulating the wearing of the 3D garment produced according to the result of arranging the patterns on an object such as a 3D avatar.

The output device 1450 may be, for example, a display device or a printing device that displays pattern pieces on a sheet of paper or a cloth.

The memory 1470 may store the pattern information for each pattern obtained through the communication interface 1410. The memory 1470 may also store the arrangement points predicted by the processor 1430 and/or the patterns arranged on the 3D avatar based on the arrangement points. The memory 1430 may store various pieces of information generated in a processing process of the processor 1430 described above. In addition, the memory 1470 may store various data and programs. The memory 1470 may include, for example, a volatile memory or a non-volatile memory. The memory 1470 may include a high-capacity storage medium such as a hard disk to store various data.

In addition, the processor 1430 may perform at least one of the methods described above with reference to FIGS. 1 to 13E or an algorithm corresponding to the at least one method. The processor 1430 may be a hardware-implemented data processing device having a physically structured circuit to execute desired operations. The desired operations may include, for example, codes or instructions included in a program. The processor 1430 may be implemented as, for example, a central processing unit (CPU), a graphics processing unit (GPU), or a neural network processing unit (NPU). The automatic arrangement device 1400 that is the hardware-implemented data processing device may include, for example, a microprocessor, a CPU, a processor core, a multi-core processor, a multiprocessor, an application-specific integrated circuit (ASIC), and a field-programmable gate array (FPGA).

The processor 1430 may execute the program and control the automatic arrangement device 1400. The code of the program executed by the processor 1430 may be stored in the memory 1470.

According to an embodiment, the automatic arrangement device 1400 may include a server including a neural network model that is trained to classify and arrange patterns based on confidence scores calculated based on pattern information for each pattern constituting a garment, and a device that inputs, to the neural network model, the pattern information for each pattern including the shapes and sizes of the patterns received from a user, receive a result of predicting arrangement points at which the patterns are to be initially arranged on a 3D avatar, and arranges the patterns on the 3D avatar according to the predicted arrangement points.

The embodiments described herein may be implemented using hardware components, software components and/or combinations thereof. A processing device may be implemented using one or more general-purpose or special purpose computers, such as, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such as, parallel processors.

The software may include a computer program, a piece of code, an instruction, or some combination thereof, to independently or collectively instruct or configure the processing device to operate as desired. Software and/or data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described examples may be recorded in non-transitory computer-readable media including program instructions to implement various operations of the above-described examples. The media may also include, alone or in combination with the program instructions, data files, data structures, and the like. The program instructions recorded on the media may be those specially designed and constructed for the purposes of examples, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter. The above-described hardware devices may be configured to act as one or more software modules in order to perform the operations of the above-described examples, or vice versa.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims and their equivalents, and all variations within the scope of the claims and their equivalents are to be construed as being included in the disclosure.

Embodiments of the invention are set out in accordance with the following numbered clauses.
1. A method of arranging patterns of a garment, comprising:
   receiving pattern information indicating configurations of each of the patterns;
   applying the pattern information to a neural network model to extract features from the configurations of each of the patterns, and predict arrangement points for placing the patterns relative to a three-dimensional (3D) avatar on which the garment is placed by processing the extracted features;
   arranging at least a subset of the patterns at the predicted arrangement points;
   assembling the patterns from the arrangement points into the garment placed on the 3D avatar; and
   performing simulation of the garment on the 3D avatar.
2. The method of clause 1, further comprising:
   generating prediction scores for each of the patterns, each of the prediction scores indicating likelihood that placing of each of the patterns onto each of the arrangement points is correct;
   setting a highest prediction score for each of the patterns as a confidence score of each of the patterns; and
   prioritizing arrangement of the patterns according to confidence scores of the patterns, a pattern with a higher confidence score having a higher priority in arranging of the patterns at an arrangement point associated with the confidence score.
3. The method of clause 2, wherein the configurations of each of the patterns comprise sizes and shapes of each of the patterns.
4. The method of clause 2, wherein the neural network model is trained by backpropagating a loss representing a difference between predicted arrangement points for each of training patterns and correct arrangement points for each of the training patterns.
5. The method of clause 2, wherein the neural network model is configured to:
   determine a major classification class of an arrangement plate to which a target pattern belongs;
   determine each confidence score of the target pattern belonging to each of the major classification class; and
   determine a confidence score corresponding to the major classification class by adding the confidence scores.
6. The method of clause 1, wherein the pattern information further comprises at least one of:
   symmetry information of the patterns indicating which of the patterns are symmetrical;
   a total number of the patterns in the garment; and
   internal line segment information of the patterns comprising at least one of a notch of the patterns, a sewing line of the patterns, a cut line of the patterns, a dart line of the patterns, a length of each line segment of the patterns, or a curvature of each line segment of the patterns.
7. The method of clause 1, further comprising:
   receiving supplemental information comprising at least one of a size of the 3D avatar, positions of the arrangement points on the 3D avatar, or a size of an arrangement plate comprising the arrangement points; and
   feeding the supplemental information to the neural network model for predicting the arrangement points.
8. The method of clause 1, further comprising:
   predicting sewing information indicating pairs of line segments of the patterns to be sewn and directions in which the line segments are to be sewn.
9. The method of clause 8, wherein the neural network model is trained by backpropagating a difference between predicted sewing information and correct sewing information.
10. The method of clause 1, wherein the neural network model is trained by backpropagating a loss derived from a length between line segments of the patterns to be sewn to each other.
11. The method of clause 1, further comprising :
   determining whether a target pattern is a superimposing pattern based on whether the pattern satisfies a predetermined condition; and
   responsive to determining that the target pattern is the superimposing pattern, excluding information of the superimposing pattern from the pattern information applied to the neural network model.
12. The method of clause 11, wherein the predetermined condition comprises at least one of:
   a size of the target pattern being less than or equal to a preset threshold size;
   presence of a line segment of another pattern that is sewn to an internal line segment of the target pattern; or
   the target pattern being connected to another superimposing pattern by sewing.
13. The method of clause 11, further comprising:
   responsive to determining that the target pattern is the superimposing pattern , arranging the target pattern by superimposing the target pattern on a base pattern to be sewn with the target pattern.
14. The method of clause 1, further comprising:
   determining whether a target pattern is symmetrical relative to another of the patterns;
   determining a total size of the target pattern and the other pattern responsive to determining that the target pattern is symmetrical; and
   responsive to the total size being less than or equal to a threshold size, determining the target pattern as a superimposing pattern.
15. The method of clause 2, wherein the arranging of at least the subset of patterns comprises:
   determining whether each of the confidence scores exceed a preset confidence threshold value; and
   arranging the subset of patterns at the predicted arrangement points responsive to the confidence scores of the subset of patterns exceeding the preset confidence threshold value.
16. The method of clause 15, further comprising receiving an adjustment to the preset confidence value through a user interface (UI).
17. The method of clause 15, wherein the arranging of at least the subset of patterns comprises:
   determining whether a target pattern corresponds to a first symmetrical pattern that is symmetrical to a second symmetrical pattern; and
   responsive to determining that the target pattern is the first symmetrical pattern, arranging the first symmetrical pattern and the second symmetrical pattern at arrangement points that are symmetrically placed on the 3D avatar.
18. The method of clause 17, responsive to the first symmetrical pattern having a higher confidence score relative to the second symmetrical pattern, arranging the first symmetrical pattern at a predicted arrangement point and arranging the second symmetrical pattern at a position symmetric to the predicted arrangement point on the 3D avatar.
19. The method of clause 17, responsive to the target pattern determined as the first symmetric pattern and having line segments to be sewn to another pattern, arranging the target pattern and the other pattern at a predicted arrangement points of the target pattern or the other pattern having a higher confidence score.
20. The method of clause 17, wherein the arranging of at least the subset of patterns further comprises:
   determining whether a first predicted arrangement point for the first symmetrical pattern and a second predicted arrangement point for the second symmetrical pattern are identical;
   responsive to determining that the first predicted arrangement point is identical to the second predicted arrangement point, arranging one of the first symmetric pattern and the second symmetrical pattern with a higher confidence score at the first predicted arrangement point.
21. The method of clause 1, wherein the arranging of at least the subset of patterns comprises:
   responsive to a target pattern corresponding to a portion of one of arrangement plates of the garment, and no pattern remaining in the one of the arrangement plates other than the target pattern corresponding to the portion, arranging the target pattern corresponding to the portion at a center of the one of the arrangement plates.
22. The method of clause 1, wherein the arranging of at least the subset of patterns comprises:
   arranging a superimposing pattern of the patterns on a base pattern to which the superimposing pattern is imposed.
23. The method of clause 1, wherein the patterns comprise:
   information on corresponding arrangement points and arrangement plates comprising the arrangement points.
24. The method of clause 1, wherein the pattern information comprises an image of each of the patterns.
25. A non-transitory computer-readable storage medium storing instructions thereon, the instructions when executed by one or more processors cause the one or more processors to:
   receive pattern information indicating configurations of each of patterns of a garment;
   apply the pattern information to a neural network model to extract features from the configurations of each of the patterns;
   predict arrangement points, by the neural network model, for placing the patterns relative to a three-dimensional (3D) avatar on which the garment is placed by processing the extracted features;
   arrange at least a subset of the patterns at the predicted arrangement points;
   assemble the patterns from the arrangement points into the garment placed on the 3D avatar; and
   perform simulation of the garment on the 3D avatar.
26. A computing device comprising:
   one or more processors; and
   memory storing instructions thereon, the instructions when executed by the one or more processors cause the one or more processors to:
      receive pattern information indicating configurations of each of patterns of a garment,
      apply the pattern information to a neural network model to extract features from the configurations of each of the patterns,
      predict arrangement points, by the neural network model, for placing the patterns relative to a three-dimensional (3D) avatar on which the garment is placed by processing the extracted features,
      arrange at least a subset of the patterns at the predicted arrangement points,
      assemble the patterns from the arrangement points into the garment placed on the 3D avatar, and
      perform simulation of the garment on the 3D avatar.
27. A non-transitory computer-readable storage medium storing a neural network model trained by:
   receiving pattern information indicating configurations of each of training patterns, at least a subset of the training patterns forming a garment;
   receiving correct arrangement points for each of the training pattern on a three-dimensional (3D) avatar on which the garment is placed;
   extracting features from the pattern configurations of each of the training patterns;
   predicting, by the neural network model, arrangement points for placing the patterns relative to the 3D avatar;
   determining loss representing differences between the predicted arrangement points and the correct arrangement points; and
   backpropagating the loss to update weights of the neural network model.
28. The non-transitory computer-readable storage medium of clause 27, wherein the extracting of the features comprises:
   extracting a first feature of a first pattern;
   extracting a second feature of a second pattern; and
   generating a third feature and a fourth feature by processing the first pattern and the second pattern by a transformer encoder of the network model.
29. The non-transitory computer-readable storage medium of clause 27, wherein the pattern information comprises images of the training patterns.
30. The non-transitory computer-readable storage medium of clause 27, wherein the neural network model is further trained by:
   predicting sewing information indicating pairs of line segments of the training patterns to be sewn and directions in which the line segments are to be sewn;
   receiving correct sewing information of the training patterns; and
   backpropagating a difference between predicted sewing information and correct sewing information to update the neural network model.

## Claims

1. A method of arranging patterns of a garment, comprising:
receiving pattern information indicating configurations of each of the patterns;
applying the pattern information to a neural network model to extract features from the configurations of each of the patterns, and predict arrangement points for placing the patterns relative to a three-dimensional (3D) avatar on which the garment is placed by processing the extracted features;
arranging at least a subset of the patterns at the predicted arrangement points;
assembling the patterns from the arrangement points into the garment placed on the 3D avatar; and
performing simulation of the garment on the 3D avatar.

2. The method of claim 1, further comprising:
generating prediction scores for each of the patterns, each of the prediction scores indicating likelihood that placing of each of the patterns onto each of the arrangement points is correct;
setting a highest prediction score for each of the patterns as a confidence score of each of the patterns; and
prioritizing arrangement of the patterns according to confidence scores of the patterns, a pattern with a higher confidence score having a higher priority in arranging of the patterns at an arrangement point associated with the confidence score.

3. The method of claim 2, the configurations of each of the patterns comprise sizes and shapes of each of the patterns.

4. The method of claim 2, wherein the neural network model is trained by backpropagating a loss representing a difference between predicted arrangement points for each of training patterns and correct arrangement points for each of the training patterns; and/or
wherein the neural network model is configured to:
determine a major classification class of an arrangement plate to which a target pattern belongs;
determine each confidence score of the target pattern belonging to each of the major classification class; and
determine a confidence score corresponding to the major classification class by adding the confidence scores.

5. The method of any preceding claim, wherein the pattern information further comprises at least one of:
symmetry information of the patterns indicating which of the patterns are symmetrical;
a total number of the patterns in the garment; and
internal line segment information of the patterns comprising at least one of a notch of the patterns, a sewing line of the patterns, a cut line of the patterns, a dart line of the patterns, a length of each line segment of the patterns, or a curvature of each line segment of the patterns.

6. The method of any preceding claim, further comprising:
receiving supplemental information comprising at least one of a size of the 3D avatar, positions of the arrangement points on the 3D avatar, or a size of an arrangement plate comprising the arrangement points; and
feeding the supplemental information to the neural network model for predicting the arrangement points.

7. The method of any preceding claim, further comprising:
predicting sewing information indicating pairs of line segments of the patterns to be sewn and directions in which the line segments are to be sewn, wherein optionally
the neural network model is trained by backpropagating a difference between predicted sewing information and correct sewing information.

8. The method of any preceding claim, wherein the neural network model is trained by backpropagating a loss derived from a length between line segments of the patterns to be sewn to each other.

9. The method of any preceding claim, further comprising:
determining whether a target pattern is a superimposing pattern based on whether the pattern satisfies a predetermined condition; and
responsive to determining that the target pattern is the superimposing pattern, excluding information of the superimposing pattern from the pattern information applied to the neural network model, wherein optionally
the predetermined condition comprises at least one of:
a size of the target pattern being less than or equal to a preset threshold size;
presence of a line segment of another pattern that is sewn to an internal line segment of the target pattern; or
the target pattern being connected to another superimposing pattern by sewing.

10. The method of claim 9, further comprising:
responsive to determining that the target pattern is the superimposing pattern , arranging the target pattern by superimposing the target pattern on a base pattern to be sewn with the target pattern.

11. The method of any preceding claim, further comprising:
determining whether a target pattern is symmetrical relative to another of the patterns;
determining a total size of the target pattern and the other pattern responsive to determining that the target pattern is symmetrical; and
responsive to the total size being less than or equal to a threshold size, determining the target pattern as a superimposing pattern.

12. The method of any of claims 2 to 11 when dependent on claim 2, wherein the arranging of at least the subset of patterns comprises:
determining whether each of the confidence scores exceed a preset confidence threshold value; and
arranging the subset of patterns at the predicted arrangement points responsive to the confidence scores of the subset of patterns exceeding the preset confidence threshold value, wherein optionally
the method further comprises receiving an adjustment to the preset confidence value through a user interface (UI).

13. The method of claim 12, wherein the arranging of at least the subset of patterns comprises:
determining whether a target pattern corresponds to a first symmetrical pattern that is symmetrical to a second symmetrical pattern; and
responsive to determining that the target pattern is the first symmetrical pattern, arranging the first symmetrical pattern and the second symmetrical pattern at arrangement points that are symmetrically placed on the 3D avatar, wherein optionally
responsive to the first symmetrical pattern having a higher confidence score relative to the second symmetrical pattern, arranging the first symmetrical pattern at a predicted arrangement point and arranging the second symmetrical pattern at a position symmetric to the predicted arrangement point on the 3D avatar.

14. The method of claim 13, responsive to the target pattern determined as the first symmetric pattern and having line segments to be sewn to another pattern, arranging the target pattern and the other pattern at a predicted arrangement points of the target pattern or the other pattern having a higher confidence score.

15. The method of claim 13, wherein the arranging of at least the subset of patterns further comprises:
determining whether a first predicted arrangement point for the first symmetrical pattern and a second predicted arrangement point for the second symmetrical pattern are identical;
responsive to determining that the first predicted arrangement point is identical to the second predicted arrangement point, arranging one of the first symmetric pattern and the second symmetrical pattern with a higher confidence score at the first predicted arrangement point.

16. The method of any preceding claim, wherein the arranging of at least the subset of patterns comprises:
responsive to a target pattern corresponding to a portion of one of arrangement plates of the garment, and no pattern remaining in the one of the arrangement plates other than the target pattern corresponding to the portion, arranging the target pattern corresponding to the portion at a center of the one of the arrangement plates; and/or
wherein the arranging of at least the subset of patterns comprises:
arranging a superimposing pattern of the patterns on a base pattern to which the superimposing pattern is imposed.

17. The method of any preceding claim, wherein the patterns comprise:
information on corresponding arrangement points and arrangement plates comprising the arrangement points; and/or
wherein the pattern information comprises an image of each of the patterns.

18. A non-transitory computer-readable storage medium storing instructions thereon, the instructions when executed by one or more processors cause the one or more processors to:
receive pattern information indicating configurations of each of patterns of a garment;
apply the pattern information to a neural network model to extract features from the configurations of each of the patterns;
predict arrangement points, by the neural network model, for placing the patterns relative to a three-dimensional (3D) avatar on which the garment is placed by processing the extracted features;
arrange at least a subset of the patterns at the predicted arrangement points;
assemble the patterns from the arrangement points into the garment placed on the 3D avatar; and
perform simulation of the garment on the 3D avatar.

19. A computing device comprising:
one or more processors; and
memory storing instructions thereon, the instructions when executed by the one or more processors cause the one or more processors to:
receive pattern information indicating configurations of each of patterns of a garment,
apply the pattern information to a neural network model to extract features from the configurations of each of the patterns,
predict arrangement points, by the neural network model, for placing the patterns relative to a three-dimensional (3D) avatar on which the garment is placed by processing the extracted features,
arrange at least a subset of the patterns at the predicted arrangement points,
assemble the patterns from the arrangement points into the garment placed on the 3D avatar, and
perform simulation of the garment on the 3D avatar.

20. A non-transitory computer-readable storage medium storing a neural network model trained by:
receiving pattern information indicating configurations of each of training patterns, at least a subset of the training patterns forming a garment;
receiving correct arrangement points for each of the training pattern on a three-dimensional (3D) avatar on which the garment is placed;
extracting features from the pattern configurations of each of the training patterns;
predicting, by the neural network model, arrangement points for placing the patterns relative to the 3D avatar;
determining loss representing differences between the predicted arrangement points and the correct arrangement points; and
backpropagating the loss to update weights of the neural network model.

21. The non-transitory computer-readable storage medium of claim 20, wherein the extracting of the features comprises:
extracting a first feature of a first pattern;
extracting a second feature of a second pattern; and
generating a third feature and a fourth feature by processing the first pattern and the second pattern by a transformer encoder of the network model; and/or
wherein the pattern information comprises images of the training patterns; and/or
wherein the neural network model is further trained by:
predicting sewing information indicating pairs of line segments of the training patterns to be sewn and directions in which the line segments are to be sewn;
receiving correct sewing information of the training patterns; and
backpropagating a difference between predicted sewing information and correct sewing information to update the neural network model.
